# EUROPEAN PATENT SPECIFICATION

(11) **EP 0 516 449 B1**
(45) Date of publication and mention of the grant of the patent: **05.03.1997**
(21) Application number: 92304909.2
(22) Date of filing: 29.05.1992
(51) Int. Cl.: H04N 3/15, G07C 1/24

(54) **Camera apparatus**
Kameraanordnung
Caméra

(30) Priority: 31.05.1991 JP 129601/91; 31.05.1991 JP 129977/91; 07.06.1991 JP 136597/91; 09.04.1992 JP 89050/92
(43) Date of publication of application: 02.12.1992
(73) Proprietor: SONY CORPORATION, Tokyo 141 (JP)
(72) Inventor: Tamura, Eiji, c/o Patents Div., Sony Corporation, Tokyo 141 (JP)
(74) Representative: Cotter, Ivan John

(56) References cited:
- EP-A- 0 236 157
- EP-A- 0 369 585
- DE-A- 3 925 375
- GB-A- 2 122 338

## Description

This invention relates to camera apparatus.

Slit cameras are widely used to decide the results of races involving objects which are moving at high speed. Because standard system television cameras cannot take pictures of objects moving at high speed, the slit camera is designed to observe an object in a line fashion. Figure 1A of the accompanying drawings shows the most simplified arrangement of a previously proposed slit camera.

In Figure 1A, an object 1 is moving at high speed in the direction shown by the arrow D. An object image 4 is detected, or picked up, by a line sensor 3 via a relay lens 2, and a video signal V is generated from the line sensor 3 in response to the detected image 4.

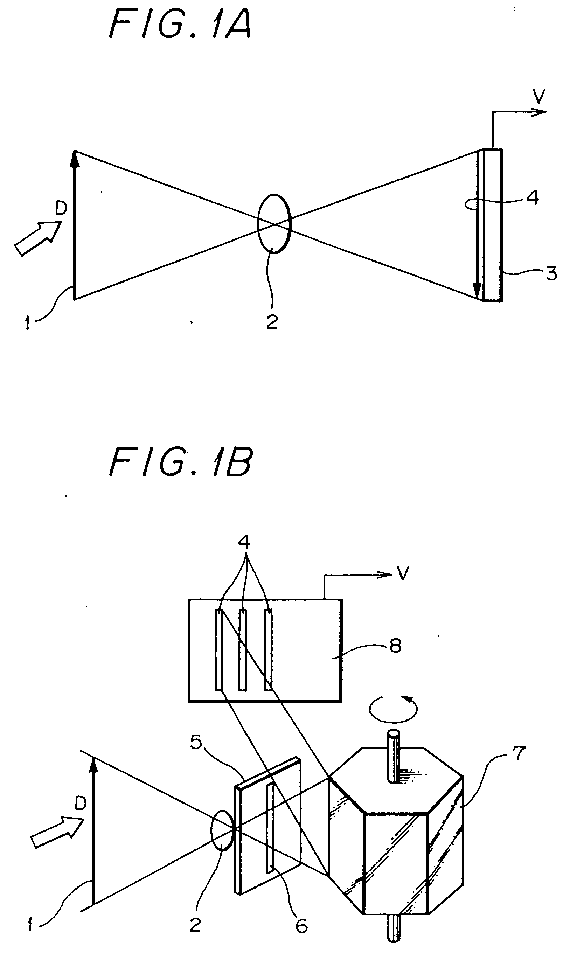

Figure 1B shows another previously proposed slit camera in which a slit image is focused on an area sensor 8.

As shown in Figure 1B, an image of an object 1 which is moving at high speed in the direction shown by the arrow D is incident on each plane of a polygonal mirror 7 via a relay lens 2 and a slit 6 formed in a slit plate 5. The polygonal mirror 7 is rotated in the counter-clockwise direction as shown by the arrow in the figure so that images from the slit 6 reflected by the respective planes of the polygonal mirror 7 are sequentially projected onto the area sensor 8 as projected images 4. These projected images 4 are output as the video signal V.

In the slit camera shown in Figure 1A, the camera apparatus requires special sensors, such as a line sensor or the like, and an area sensor 8, such as a solid state image detection device (hereinafter simply referred to as a CCD (charge-coupled device)) or the like as utilised in ordinary cameras, cannot be used as the image detection means.

Even though the slit camera using the polygonal mirror as shown in Figure 1B can use an area sensor 8, such a slit camera requires use of a mechanical rotating mechanism such as the slit plate 5 and the polygonal mirror 7.

Further, an area sensor using only one CCD or the like cannot provide sufficient resolution for some applications.

Furthermore, if a colour camera apparatus is realised using the slit plate 5 and the polygonal mirror 7, then a mechanical rotating mechanism is needed, which causes colour band characteristic deterioration.

The invention, at least in preferred embodiments, provides an improved slit camera in which the aforementioned shortcomings and disadvantages of the previous proposals can be eliminated.

EP-A-O 236 157 discloses apparatus in accordance with the precharacterising portion of claim 1. The image acquired by a CCD sensor of the apparatus has bands of useful video data separated by gaps with no useful video data. All lines of video data are shifted into the line reading register at the same rate, integrated charges being read out from the register both before and after the lines corresponding to a band of useful data are shifted into the reading register.

GB-A-2 122 338 discloses a system for superimposing vertical cursor lines on the displayed image acquired by a TV camera to enable the width of an object to be measured.

According to one aspect of the invention there is provided camera apparatus comprising:
a two-dimensional array of image elements arranged in lines and columns for producing image charge signals;
a plurality of column shift registers associated with respective columns of the image elements for receiving the image charge signals therefrom and shifting the image charge signals line by line in the column direction;
a line shift register for receiving successive lines of image charge signals from the column shift registers and shifting the image charge signals of each line to an output terminal; and
drive means for driving the column shift registers to shift the image charge signals towards the line shift register;
characterised in that the apparatus includes line designation means for selecting at least one line of the image charge signals produced by the array of image elements; and in that the drive means is arranged to drive the column shift registers to shift the lines of image charge signals at a low rate when said at least one line of image charge signals is being shifted into the line shift register and to shift the lines of image charge signals at a high rate when the other lines of image charge signals are being shifted into the line shift register, whereby the camera apparatus is operable for detecting an object moving at high speed.

The invention, at least in preferred embodiments, provides one or more of the following: a slit camera which is realised purely by the electrical operation of an area sensor such as a CCD and which can also serve as an ordinary camera; a slit camera of high sensitivity which can also serve as an ordinary camera; a slit camera which can also serve as a camera driven according to a standard television system; a slit camera of high sensitivity and high resolution which can also serve as an ordinary camera; a slit camera which has satisfactory resolution in the time-axis direction; and a colour slit camera which can also serve as an ordinary colour camera.

Preferred embodiments of the invention will now be described, by way of example, with reference to the accompanying drawings, throughout which like parts are referred to by like references, and in which:
Figure 1A is a schematic diagram illustrating the optical system of a previously proposed slit camera;
Figure 1B is a schematic diagram illustrating the optical system of another previously proposed slit camera;
Figure 2, which is formed of Figures 2A and 2B which are on separate sheets, is a block diagram showing a first embodiment of camera apparatus according to the invention;
Figure 3 is a plan view of a standard mode CCD which is used in the camera apparatus of Figure 2;
Figures 4A to 4D are waveform diagrams which are used to explain the operation of the standard mode CCD shown in Figure 3;
Figure 5 is a plan view of a slit mode CCD which is used in the camera apparatus of Figure 2;
Figures 6A to 6D are waveform diagrams which are used to explain the operation of the slit mode CCD shown in Figure 5;
Figure 7 is a schematic diagram showing an example of a picture displayed on a monitor receiver used in the camera apparatus of Figure 2;
Figure 8 is a waveform diagram which is used to explain how an index signal may be used in the camera apparatus of Figure 2;
Figure 9 is a schematic diagram to which reference will be made in explaining the measurement of the speed of a moving object;
Figures 10A to 10E are waveform diagrams which are used to explain the operation of a line adder circuit used in the camera apparatus of Figure 2;
Figure 11 is a block diagram showing a circuit configuration for the line adder circuit;
Figure 12 is a waveform diagram of a vertical blanking period to which reference will be made in explaining the operation of the camera apparatus of Figure 2;
Figure 13 is a block diagram showing a circuit configuration for a slit mode signal generator circuit used in the camera apparatus of Figure 2;
Figures 14A to 14I are waveform diagrams used to explain the operation of the slit mode signal generator circuit shown in Figure 13;
Figure 15, which is formed of Figures 15A and 15B which are on separate sheets, is a block diagram of a second embodiment of camera apparatus according to the invention;
Figure 16 is a perspective view illustrating the arrangement of a three-chip CCD which can be used in camera apparatus embodying the present invention;
Figures 17A to 17C are waveform diagrams which are used to explain an adding method which can be used in camera apparatus embodying the invention;
Figure 18, which is formed of Figures 18A and 18B which are on separate sheets, is a block diagram of a third embodiment of camera apparatus according to the invention;
Figures 19A to 19C are waveform diagrams showing an example of an output from the camera apparatus of Figure 18;
Figures 20A to 20G are waveform diagrams showing another example of an output from camera apparatus embodying the invention;
Figure 21, which is formed of Figures 21A and 21B which are on separate sheets, is a block diagram of colour camera apparatus according to fourth embodiment of the invention;
Figures 22A and 22B are waveform diagrams which are used to explain how a line sequential signal and an index signal may be used in the slit mode of camera apparatus embodying the invention;
Figure 23 is a schematic diagram showing a display conversion memory used in camera apparatus embodying the invention; and
Figure 24 is a block diagram showing another application of camera apparatus embodying the invention, and to which reference will be made in explaining a line sequential recording method.

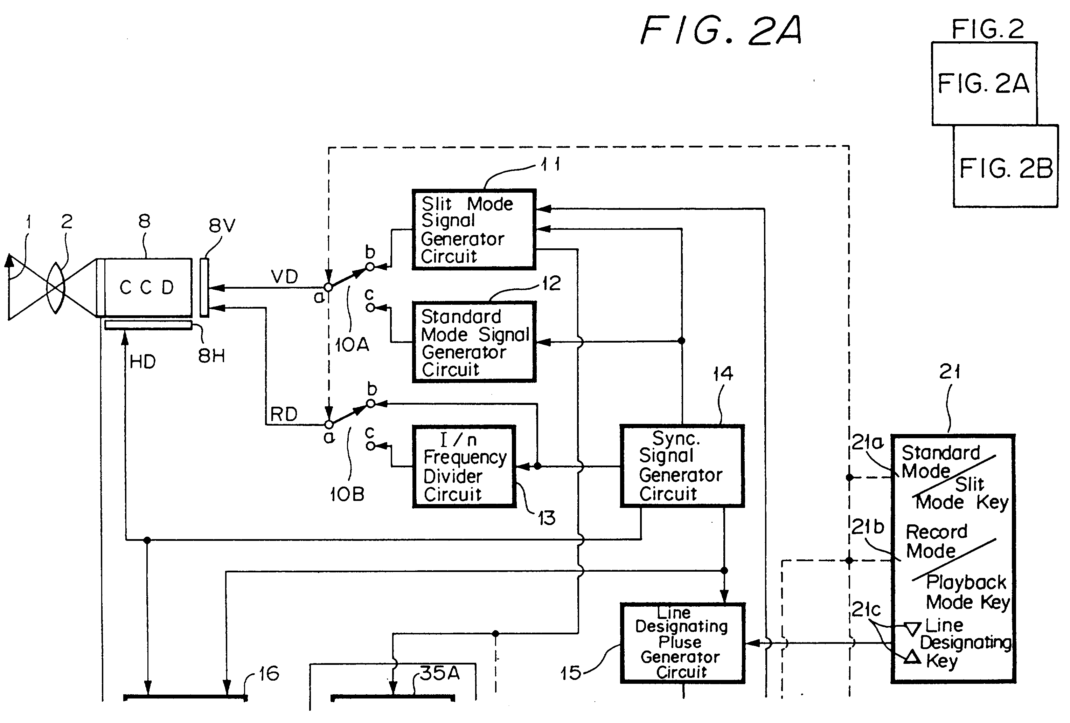

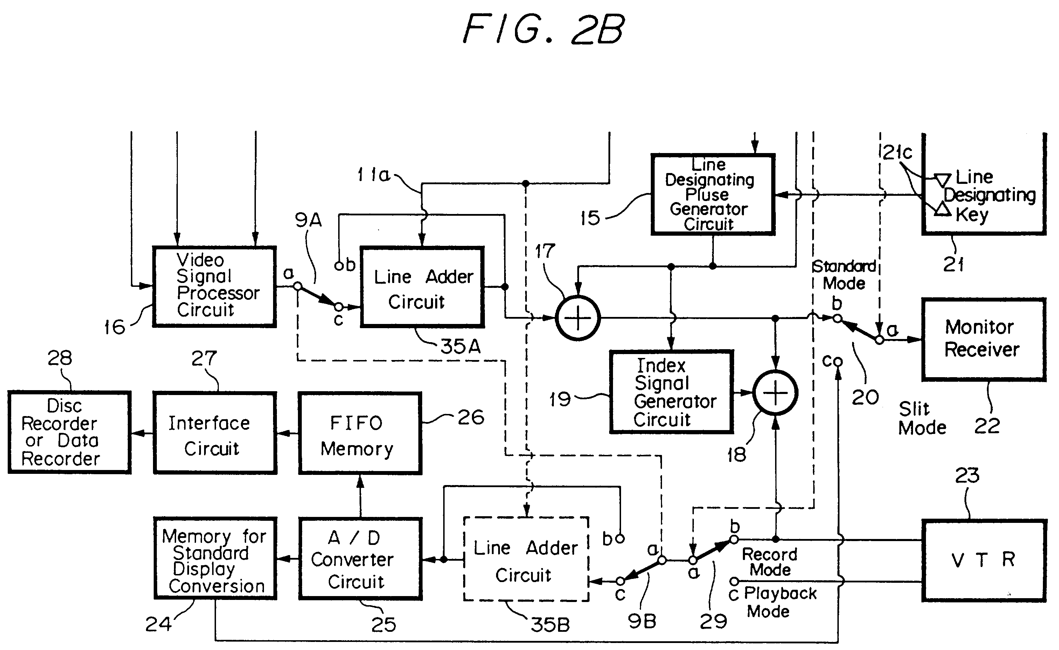

A first embodiment of a slit camera, using a single CCD, will now be described with reference to Figures 2 to 8.

Figure 2 shows in block form the entire arrangement of the slit camera. An imager device 8 is an interline type CCD comprising a pixel group forming a sensor unit, a vertical transfer shift register 8V and a horizontal transfer shift register 8H.

When a high speed moving object 1 is picked up by the CCD 8, then an object image projected through a relay lens 2 onto the pixel group of the CCD 8 is converted into an electrical signal. This electrical signal is supplied through a video processor circuit 16, a switch 9A, a line adder circuit 35A, a first adder circuit 17, and a switch 20 to a monitor receiver 22 comprising display means such as a cathode ray tube (CRT), a liquid crystal display (LCD) device or the like, and an image is thereby displayed on the monitor 22. The switch 20 is used selectively to switch between a "standard mode", in which a picture is taken according to the normal television system, and an image detection mode in which a picture is taken by a slit camera (this mode is referred to hereinafter as the "slit mode").

A video signal output from the first adder circuit 17 is supplied through a second adder circuit 18, which will be described below, to a video tape recorder (VTR) 23 and a disc recorder or data recorder 28 and thereby recorded.

A horizontal drive pulse (hereinafter referred to as "HD") or the like is supplied to the horizontal transfer shift register 8H of the CCD 8 and the video signal processor circuit 16 by a synchronising (sync) signal generator circuit 14.

An operation unit 21 includes control means such as a computer or the like. A slit mode key and a standard mode key 21a are selected on the basis of an instruction signal from the control means and hence a vertical pulse (hereinafter referred to as "VD") and a read-out pulse (hereinafter referred to as "RD") are supplied through switches 10A and 10B to the vertical transfer shift register 8V of the CCD 8.

More specifically, various vertical reference signals from the sync signal generator circuit 14 are supplied to a standard mode signal generator circuit 12, a slit mode signal generator circuit 11, the video signal processor circuit 16, a fixed contact b of the switch 10B and a line designating pulse generating circuit 15, respectively.

A line designating pulse signal from the line designating pulse generating circuit 15 is supplied to the slit mode signal generating circuit 11, and this line designating pulse is also supplied to the first adder circuit 17 and an index signal generating circuit 19.

Outputs of the slit mode signal generator circuit 11 and the standard mode signal generator circuit 12 are coupled to fixed contacts b and c of the switch 10A, and a movable contact a of the switch 10A is coupled to the vertical transfer shift register 8V of the CCD 8 to supply the vertical pulse VD to the vertical transfer shift register 8V. An output of a frequency-dividing circuit 13 is coupled to the fixed contact c of the switch 10B to supply the read-out pulse RD to the vertical transfer shift register 8V.

The operation unit 21 includes an operation key 21a for switching the CCD 8 between the standard mode and the slit mode, a record/playback key 21b for selecting recording of the signals in the respective modes and/or reproducing the same from the video tape recorder 23, and the disc recorder or data recorder 28, and a line designating key 21c for designating a line position and line number in the slit mode. As shown by the broken lines in Figure 2, operation of these key controls the slit mode and standard mode change-over switches 10A and 10B, the switch 20 for switching between the slit mode and the standard mode to be monitored, a switch 29 for switching between the recording and reproducing states of the video tape recorder 23, and the switches 9A and 9B for operating the line adder circuits 35A, 35B. Also, the line designating pulse generator circuit 15 is driven by operation of the line designating key 21c.

The second adder circuit 18 adds an index signal from the index generator circuit 19 to a signal representative of a line-designated predetermined position, and supplies the resultant signal through the video tape recorder 23, the fixed contact b and movable contact a of the recording and reproducing change-over switch 29, and the switch 9B for switching the line adder circuit 35B to an analogue-to-digital (A/D) converter circuit 25 in which the signal is converted into a digital signal. The digital signal is supplied to a standard display conversion memory 24 and a first-in first-out (FIFO) memory 26. An output of the FIFO memory 26 is supplied through an interface circuit 27 to the recording apparatus 28, such as a disc recorder, a data recorder or the like, which is different from the video tape recorder 23.

The slit mode video signal stored in the standard display conversion memory 24 is read out therefrom as the standard mode video signal and then fed via the fixed contact c of the switch 20 to the monitor receiver 22 where it is displayed on the display means.

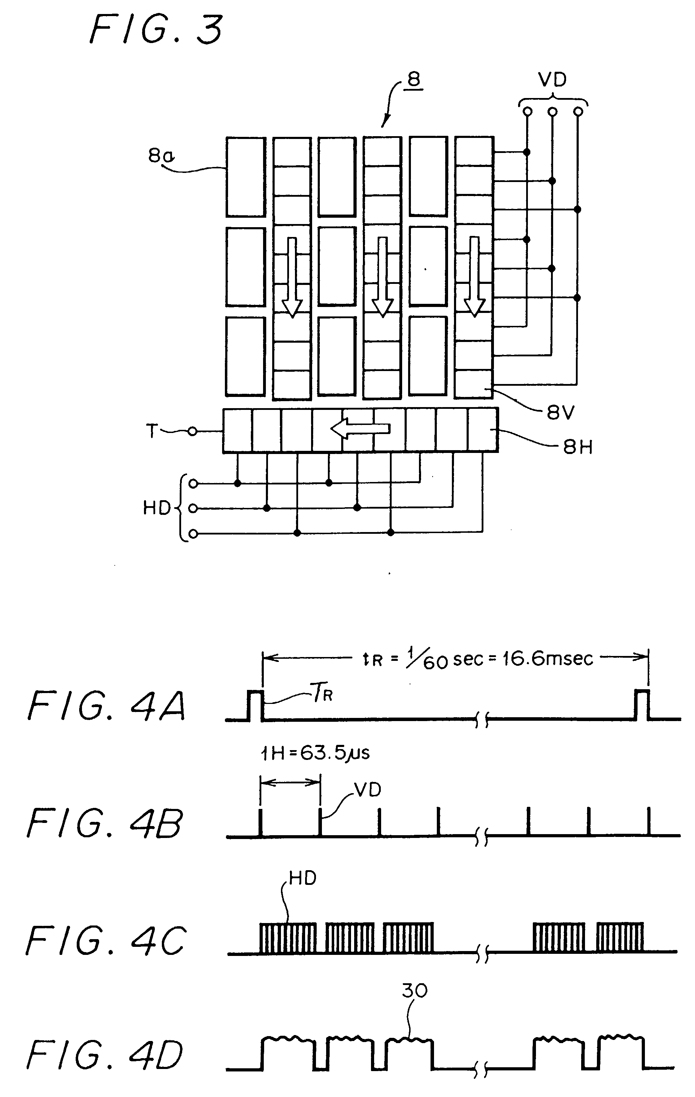

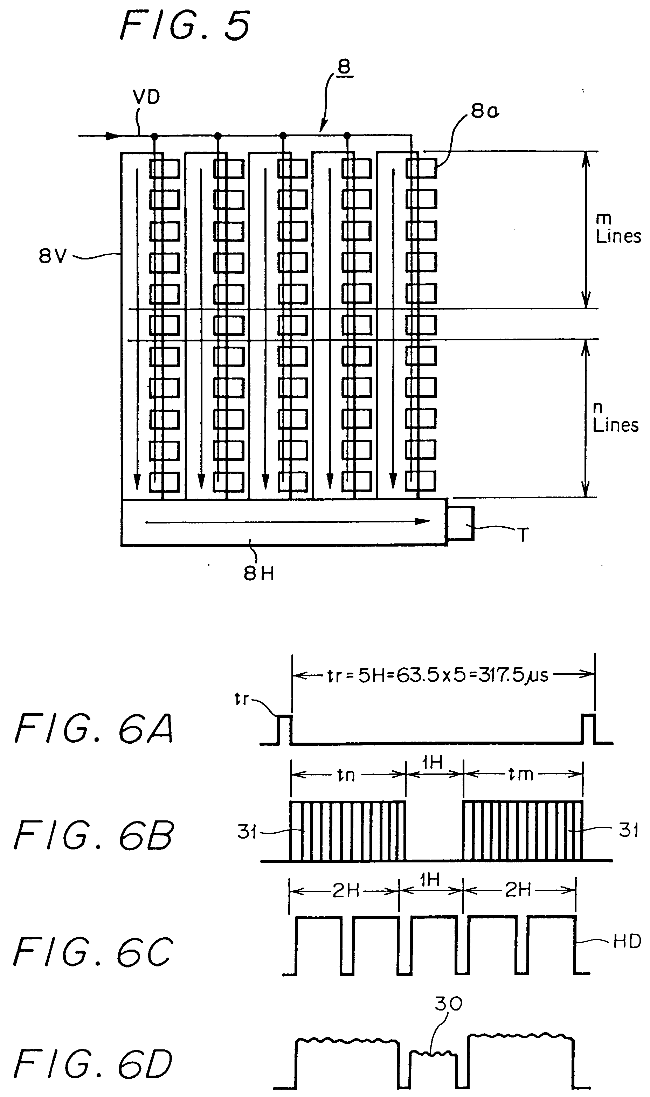

Operation of the slit mode signal generator circuit 11 and the standard mode signal generator circuit 12 will be described below with reference to Figure 3 and Figures 6A to 6D.

Referring to Figure 3 and Figures 4A to 4D, the operation by which the signal is supplied to the vertical transfer shift register 8V of the CCD 8 in the standard mode will now be described with the aid of waveform diagrams. Figure 3 shows schematically a pixel group 8a forming a sensor unit of the interline type CCD 8, the vertical transfer shift register 8V, the horizontal transfer shift register 8H, and the drive signals VD and HD supplied to the vertical and horizontal transfer shift registers 8V and 8H.

In the interline type CCD 8, the pixel group 8a extending in the vertical (Y-axis) direction and the vertical transfer shift register 8V forming the storage section are arrayed in an alternating arrangement in the horizontal (X-axis) direction. Signal charges photo-electrically converted in the pixel group 8a are momentarily transferred to the vertical transfer shift register 8V during one portion of the vertical blanking period so that the pixel group 8a is again set for storage of light. Signal charges stored in the vertical transfer shift register 8V are transferred to the horizontal transfer shift register 8H line by line in response to the drive signal VD during one portion of the horizontal blanking period, signal charges corresponding to one horizontal line being sequentially provided at an output terminal T.

That is, when a pulse T_{R} is supplied from the sync signal generator circuit 14 to the standard mode signal generator circuit 12 during a period of t_{R} = 1/60s = 16.67 ms (which corresponds to the odd field or even field period) as shown in Figure 4A, the drive signal VD, whose cycle corresponds to one horizontal period (1H = 63.5 µs) as shown in Figure 4B, is supplied from the standard mode signal generator circuit 12 to the vertical transfer shift register 8V, and a drive signal HD, shown in Figure 4C, is supplied to the horizontal transfer shift register 8H from the sync signal generator circuit 14. In this way, a video signal 30 shown in Figure 4D is output by the CCD 8 to the video signal processor circuit 16. In this case, a signal which results from dividing the signal by n in the frequency-dividing circuit 13 is supplied as the read-out pulse RD.

As a result, the read-out speed in the standard mode is determined by the maximum transfer rate of the vertical transfer shift register 8V.

Then, a pulse tr, whose cycle is tr = 5H = 63.5 µs x 5 = 317.5 µs as shown in Figure 6A, is supplied to the slit mode signal generator circuit 11 from the sync signal generator circuit 14. After charges in the pixel group 8a are transferred to the vertical shift register 8V, as shown in Figures 5 and 6C, signal charges are shifted at high speed during a 2H (n line) period, for example. When the signal charges corresponding to a target slit mode period, eg a 1H period, are transferred to the horizontal shift register 8H, then the operation of the vertical shift register 8V is stopped during the 1H period and the same low speed shift as that used in the standard mode is effected. Thereafter, signal charges are shifted at high speed during the 2H (m line) period in order to discharge unnecessary signal charges of m lines of the vertical transfer shift register 8V.

Thus, signal charges are shifted at high speed during periods tn and tm shown in Figure 6B and at low speed during the slit mode period of 1H, whereby the signal output 30 shown in Figure 6D is obtained at the output terminal T. Thus, the output signal corresponding to 1H becomes a video output in the slit mode. The read-out pulse RD in the high speed shift operation might be a pulse which is not supplied through the switch 10B and the frequency-dividing circuit 13 but whose duration is sufficiently shorter than the 1H cycle such as a pulse 31 provided during the periods tn and tm as shown in Figure 6B.

The read-out cycle tr is 317.5 µs and can thus be within 1 ms as compared with 16.6 ms in the conventional (standard mode) cycle.

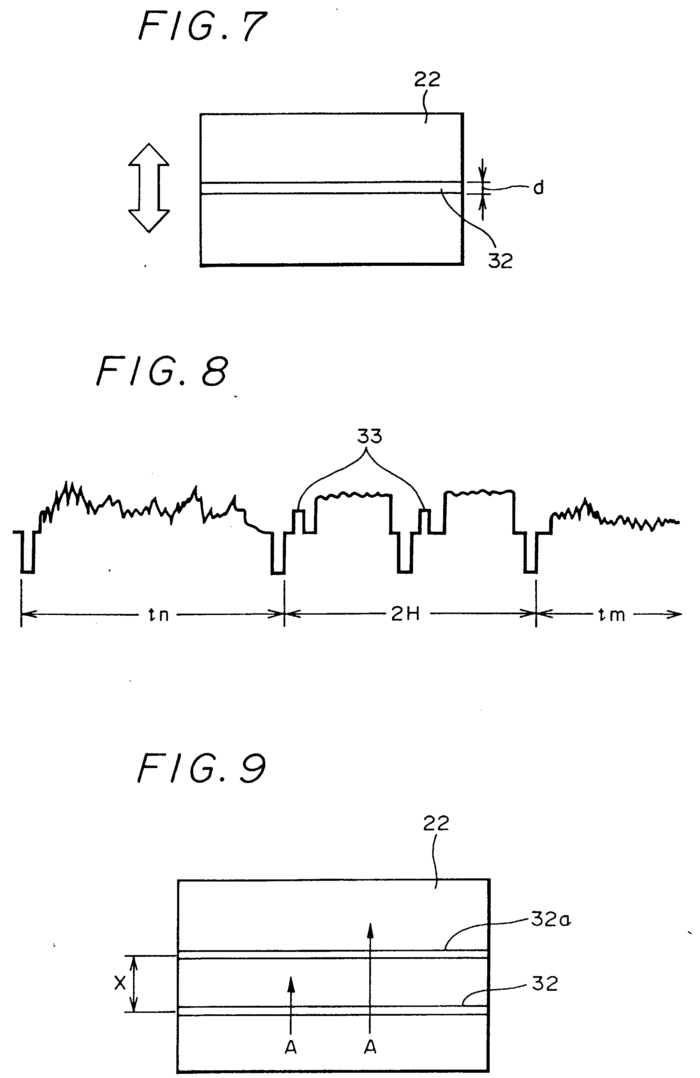

A method of designating lines in the slit mode will now be described. Initially, the operation key 21a of the operation unit 21 is set in the standard mode and a predetermined image is displayed on a screen of the display means in the monitor receiver 22 as shown in Figure 7. Then, by pressing the line designating operation key 21c up and down, a line marker 32 having a slit width d can be superimposed at a particular position of the image displayed on the screen. At that time, a picture is taken in such a fashion that the scanning direction of the CCD 8 is perpendicular to the direction of motion of the object 1.

In more detail, when the line designating key 21c of the operation unit 21 is depressed, then the line designating signal is supplied to the line designating pulse generating circuit 15 which then generates the line designating pulse on the basis of the horizontal sync signal or the like from the sync signal generator circuit 14. Then, the slit mode signal generator circuit 11 performs the high speed shift operation on the basis of the line designating pulse.

The line designating pulse supplied to the first adder circuit 17 is superimposed upon the video signal from the CCD 8. At that time, because the switch 20 is set in the standard mode wherein the movable contact a is connected to the fixed contact b, the line marker 32 shown in Figure 7 is superimposed upon the display of the monitor receiver 22, thereby designating the position of the slit line with ease.

The line designating pulse from the line designating pulse generator circuit 15 is supplied to the index generator circuit 19. This index generator circuit 19 may comprise a write buffer memory, a frame memory or the like (not shown). An index signal 33 supplied to the second adder circuit 18 is added onto the video signal as shown in Figure 8.

Figure 8 illustrates the case where the slit width of the video signal on which the index signal 33 is superimposed in the low speed shift mode is selected to be 2 lines (2H). If the index signal 33 is superimposed as described above, then a starting portion of the video signal within the slit width recorded by the video tape recorder 23 can be detected very easily by read-out of the index signal 33.

While one line of the CCD is designated in the above description, the embodiment is not limited to this feature. For example, two line markers 32 and 32a may be designated as shown in Figure 9, and in this case the speed V of the moving object 1 (see Figures 1A and 1B) or the like can be measured. If the distance between the line markers 32 and 32a thus designated is X, as shown in Figure 9, then the speed of a moving object A can be calculated as V = X/T by measuring the time T between the object A appearing at the position of the first line marker 32 and the object A appearing at the position of the second line marker 32a.

While a CCD of the interline type is described above, a CCD of the frame transfer type or the line transfer type can be utilised in a similar fashion.

While the low speed shift period in the slit mode is selected to be 1H and 2H in the above description, the read-out width may be selected to be about 1H to 10H.

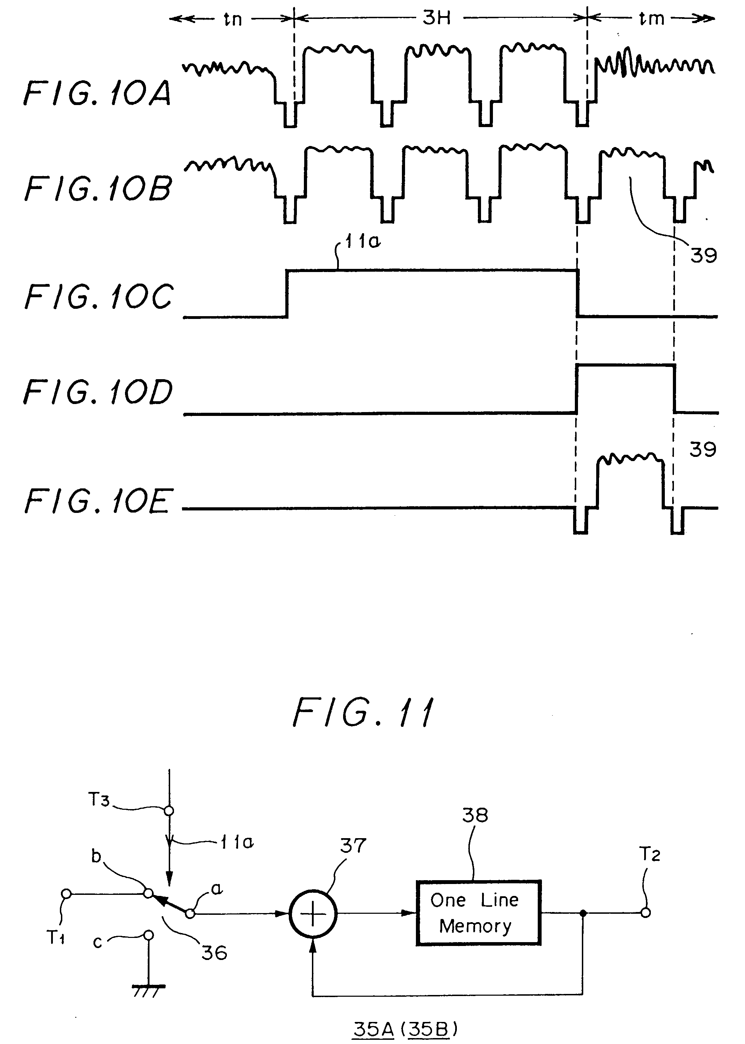

The waveform diagrams of Figures 10A to 10E and the diagram of Figure 11 explain the operation of an arrangement in which several 1H periods in the slit mode are read out, added by the line adder circuit 35A or 35B, and then recorded by the video tape recorder 23, thereby to increase the sensitivity of the output signal in the slit mode.

The line adder circuit 35A might be coupled to the succeeding stage of the video processor circuit 16 as shown in Figure 2, for example, by means of the movable contact a and the fixed contact c of the change-over switch 9A. Alternatively, the line adder circuit 35B might be interposed between the switch 9B and the A/D converter circuit 25 as shown by dashed lines in Figure 2. Incidentally, the fixed contacts b of the switches 9A and 9B are connected in the signal paths when the line adder circuit 35A or 35B is not operated.

When the line adder circuit 35A is connected at the position shown by the solid line in Figure 2, the sensitivity of the video signal in the slit mode can be increased and the video signal with increased sensitivity can be recorded by the video tape recorder 23. Further, when the line adder circuit 35B is connected at the position shown by the dashed lines in Figure 2, after the signal is reproduced by the video tape recorder 23, the image signal in the slit mode supplied via the fixed contact c and the movable contact a of the switch 29, the movable contact a and the fixed contact c of the switch 9B, the line adder circuit 35B, the A/D converter circuit 25 and the standard display conversion memory 24, is displayed on the display means of the monitor receiver 22 by means of the fixed contact c and the movable contact a of the switch 20 and the monitor receiver 22. Therefore, the sensitivity of the video signal in the playback mode can be increased.

Figure 11 shows an example of a specific arrangement of the line adder circuit 35A or 35B.

As shown in Figure 11, the video signal is input to an input terminal T₁ from the video signal processor 16 via the switch 9A, for example. This input video signal is supplied through the fixed contact b and the movable contact a of a switch 36 and an adder 37 to a one line memory 38. The output read-out from the one line memory 38 is fed back to the adder 37 and to an output terminal T₂. A fixed contact c of the switch 36 is grounded and a control signal 11a from the slit mode signal generator circuit 11 is supplied to an input terminal T₃. The movable contact a of the switch 36 is turned on and off by the control signal 11a from the slit mode signal generator circuit 11.

Operation of the line adder circuit 35A or 35B will now be described with reference to the waveform diagrams of Figures 10A to 10E.

Figure 10A shows a waveform produced when the low speed shift is effected in the slit mode during 3H periods. In Figure 10A, tn and tm represent high speed shift periods similar to those of Figure 8.

The video signal from the video signal processor circuit 16, or the reproduced video signal from the video tape recorder 23, is input to the line adder circuit 35A or 35B and the signal corresponding to the high speed shift period is eliminated within the video signal processor circuit 16, while the signal corresponding to the low speed shift period is supplied via the movable contacts a and the fixed contacts c of the switches 9A and 9B to the line adder circuits 35A and 35B. Further, during the high speed shift periods tn and tm, the movable contact a of the switch 36 shown in Figure 11 is coupled to the fixed contact c and thus grounded.

When the video signal corresponding to the 3H periods in the slit mode as shown in Figure 10A is applied, the movable contact a of the switch 36 is connected to the fixed contact b in response to the gate control signal 11a shown in Figure 10C during the 3H periods. Then, the 3H video signal is subjected to addition by the adder 37 and one line memory 38 in the line adder circuit 35A or 35B as shown in Figure 10B, and no signal is output at the output terminal T₂ during this period. The added video signal 39 provided after the addition of 3H periods is effected is gated by the gate waveform shown in Figure 10D, whereby the video signal 39 (see Figure 10E) in which the signal of 3H period has been added is provided at the output terminal T₂.

Since the predetermined line of the CCD is shifted at low speed and other lines are shifted at high speed as described above, particular lines are read out at high speed in the slit mode and hence an image of the high speed moving object 1 can be recorded on the video tape recorder 23 by the slit camera and also displayed on the monitor receiver 22. Therefore, a slit mode video signal having improved sensitivity as compared with that of the ordinary 1H slit mode video signal can be obtained.

However, if the high speed reading in the slit mode is carried out at the cycle of 5H as shown in Figure 6C, for example, when the high speed reading conforms to the format of a standard television system, eg the NTSC system, there is a problem in that the continuous reading at the unit of 1H becomes impossible because an equalizing pulse or vertical sync pulse of 0.5H occurs in the vertical blanking period.

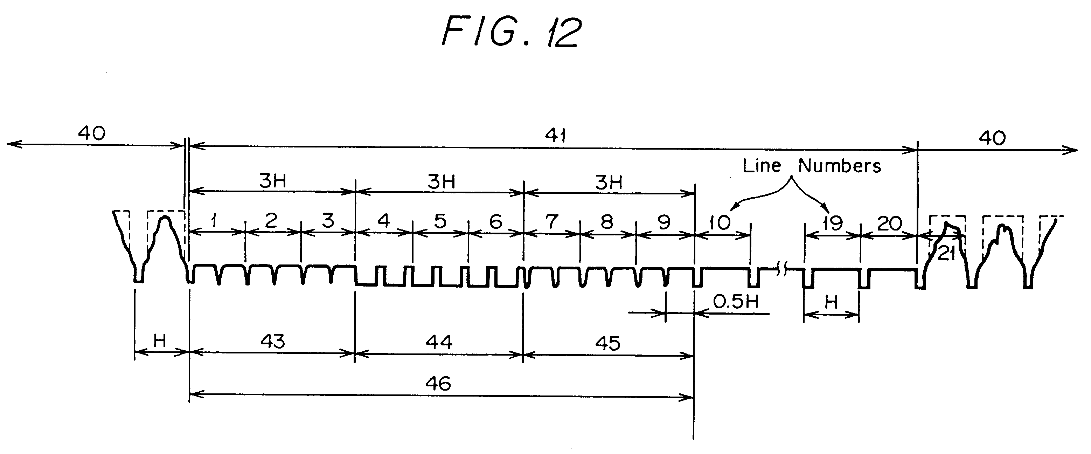

Figure 12 shows a standard waveform of the vertical blanking period according to the NTSC system which is known as one of the formats of the standard television systems. In Figure 12, reference numeral 40 indicates a video signal period and 41 a vertical blanking period of 20H. The vertical blanking period 41 includes a 9-line (H) period 46 composed of an equalizing pulse preceding period 43, a vertical sync pulse 44 and an equalizing pulse succeeding period 45, each of which is formed of 3H in the units of 0.5H, whereafter the horizontal sync pulse is changed in units of 1H over line numbers 10 to 20.

Accordingly, if the cycle is selected to be a cycle in which the predetermined line is read out at high speed at the cycle except the 9-line period shown in Figure 12, when the high speed moving object 1 is picked up by a slit camera conforming to the format of a standard television system such as the NTSC system or the like, then an accurate object image can be obtained.

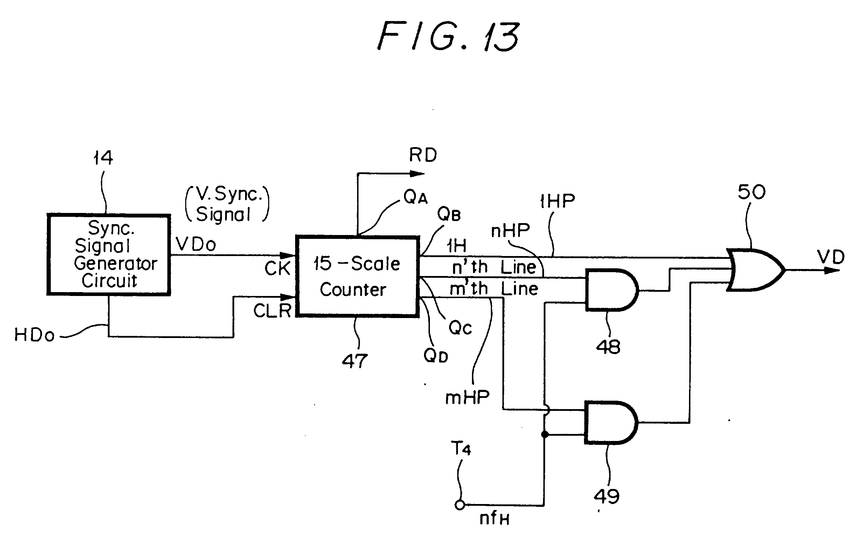

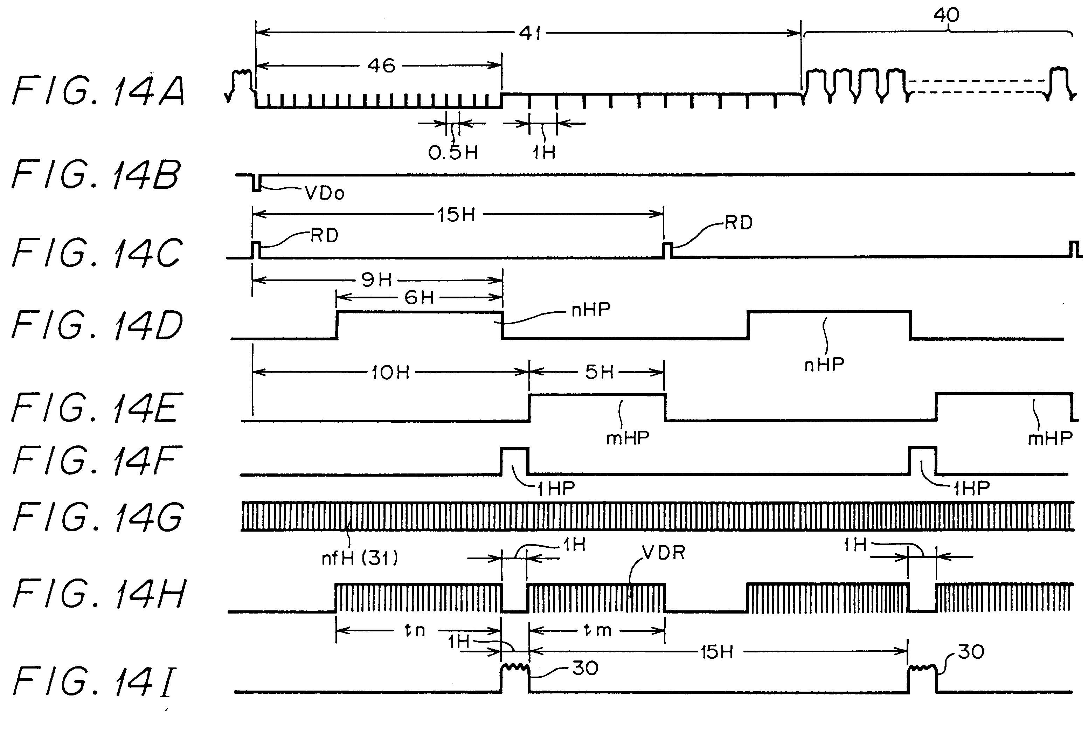

An arrangement in which the 1H read-out cycle in the slit mode can be made continuous in synchronism with the horizontal sync pulse according to the standard television system will now be described with reference to Figure 13 and Figures 14A to 14I.

Figure 13 shows an example of circuitry provided within the slit mode signal generator circuit 11 shown in Figure 2 in order to achieve the abovementioned object.

As shown in Figure 13, horizontal synchronising signals VD₀ and HD₀ from the sync signal generator circuit 14 are respectively supplied to a count input terminal CK and a reset terminal CLR of a 15-scale counter 47.

The 15-scale counter 47 generates at terminals Q_{A}, Q_{B}, Q_{C} and Q_{D} a low speed 1 line (H) cycle pulse (hereinafter referred to as "1HP"), an n-line (H) high speed gate pulse (hereinafter referred to as "nHP"), and an m-line (H) high speed gate pulse (hereinafter referred to as "mHP"), respectively. Each pulse nHP and mHP is supplied to one input terminal of respective first and second AND gates 48 and 49, while a nf_{H} pulse is supplied to the other input terminals of the first and second AND gates 48 and 49 from a terminal T₄. Outputs of the first and second gate circuits 48 and 49 and the pulse 1HP from the 15-scale counter 47 are supplied to an OR gate circuit 50. Then, the drive signal VD is output by the OR gate 50 supplied via the fixed contact b and the movable contact a of the switch 10A to the vertical transfer shift register 8V of the CCD 8 (see Figure 2).

The operation of this circuit will be described with reference to the waveform diagrams of Figures 14A to 14I.

The reason that the 15-scale counter 47 is selected is as follows. In the case of the 525 scanning lines of the NTSC standard television system, it is possible to use a 35-scale counter, a 25-scale counter, a 21-scale counter and a 15-scale counter which correspond to products of integers such as 5 x 5 = 25, 7 x 3 = 21 and 5 x 3 = 15 which result from factorising 525 as in 525 = 5 x 5 x 3 x 7. Of these counters, the minimum 15-scale counter 47 is selected in this embodiment.

As described above, the high speed reading in the slit mode is inhibited from being carried out in the 0.5H cycle portion of the 9H period 46 in the vertical blanking period 41 shown in Figure 14A.

The vertical sync signal VD₀ from the sync signal generator circuit 14 is supplied to the count input terminal CK of the 15-scale counter 47 as a pulse corresponding to the starting portion of the vertical blanking period 41 as shown in Figure 14B. Simultaneously, the horizontal sync signal HD₀ of 1H units is supplied to the reset terminal CLR of the 15-scale counter 47 so that, when supplied with the horizontal sync signal HD₀ of 0.5H units, the 15-scale counter 47 is cleared.

At the same time that the vertical sync signal VD₀ is input, the read-out pulse RD is output from the 15-scale counter 47 as shown in Figure 14C (although the read-out pulse RD is output from the sync signal generator circuit 14 in Figure 2, the read-out pulse RD may be output from either the sync signal generator 14 or the 15-scale counter 47). In this case, the high speed shift may be effected at the same time as the read-out pulse RD is output. As shown in Figure 14D, during the 9H period 46, the pulse nHP of 6H after 3H has passed is output and then fed to the first AND gate circuit 48.

Similarly, as shown in Figure 14E, after 10H has passed, the pulse mHP of 5H is output and then fed to the second AND gate circuit 49.

The first and second AND gate circuits 48 and 49 are supplied to the other input terminals with the pulse nf_{H} shown in Figure 14G from the terminal T₄. This pulse nf_{H} corresponds to the aforementioned pulse 31 which is used to read out the charges of the CCD at high speed during the period in which the pulses nHP and mHP are output.

Further, since the pulse 1HP shown in Figure 14F is supplied from the 15-scale counter 47 to the OR gate circuit 50, and the outputs of the first and second AND gates 48, 49 are also supplied to the OR gate circuit 50, the OR gate circuit 50 outputs a pulse VDR shown in Figure 14H which is supplied to the vertical transfer shift register 8V of the CCD 8.

As a result, the read-out waveform supplied from the CCD 8 to the video signal processor circuit 16 becomes the video signal 30 of 15-H cycle as shown in Figure 14I, whereby the video signal 30 can be prevented from being dropped into the 9H period 46 within the vertical blanking period 41. Thus, it is possible to obtain a slit camera which can pick up an image of a high speed moving object.

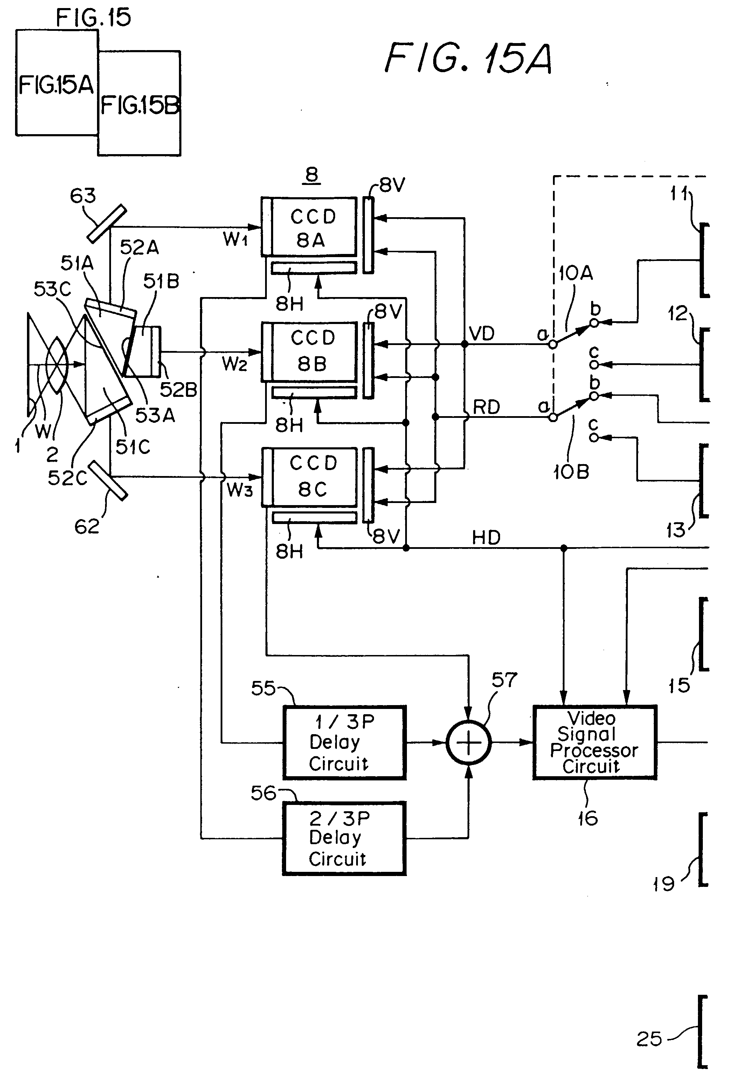

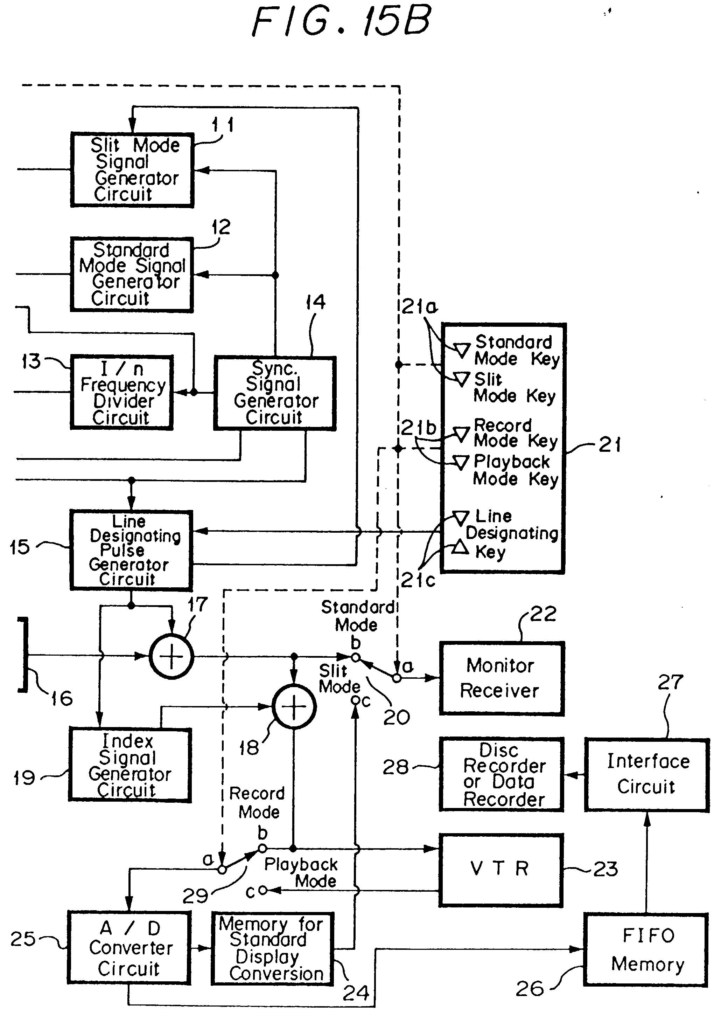

While the slit camera using a single CCD 8 is described in the above embodiment, a slit camera using three CCDs can also be constructed as shown in Figure 15. In Figure 15, parts corresponding to like parts of Figure 2 are marked with the same reference numerals and therefore will not be described in detail.

Figure 15 shows in block form the entire arrangement of a slit camera of a black and white camera apparatus. In this embodiment, the imager device 8 is composed of three CCDs of the interline type, and each of the first to third CCDs 8A, 8B and 8C comprises a pixel group forming a sensor unit, a vertical transfer shift register 8V and a horizontal transfer shift register 8H.

Prisms 51A, 51B and 51C are disposed in front of the first to third CCDs 8A, 8B and 8C to direct the object image in three directions. Each of these prisms 51A, 51B and 51C comprises a beam splitter, and incident light W from the object 1 is introduced via the relay lens 2 into the prism 51C. Reflected light W₃ reflected by an end face 53C of the prism 51C travels through a light emitting face 52C and a mirror 62 to the photo-sensitive surface of the third CCD 8C.

The incident light W travelling through the end face 53C of the prism 51C is reflected by an end face 53A of the prism 51A to provide reflected light W₁. The reflected light W₁ travels through an end face 52A and a mirror 63 to the photo-sensitive surface of the first CCD 8A.

The incident light W travelling through the end face 53A of the prism 51A travels through the prism 51B to provide incident light W₂. This incident light W₂ travels through an end face 52B of the prism 51B to the photo-sensitive surface of the second CCD 8B.

While the first to third CCDs 8A, 8B, 8C are shown as being disposed independently of the prisms 51A, 51B, 51C, in actual practice the first CCD 8A is bonded to the light emitting face 52A of the prism 51A, the second CCD 8B is bonded to the light emitting face 52B of the prism 51B and the third CCD 8C is bonded to a light emitting face 52C of the prism 51C.

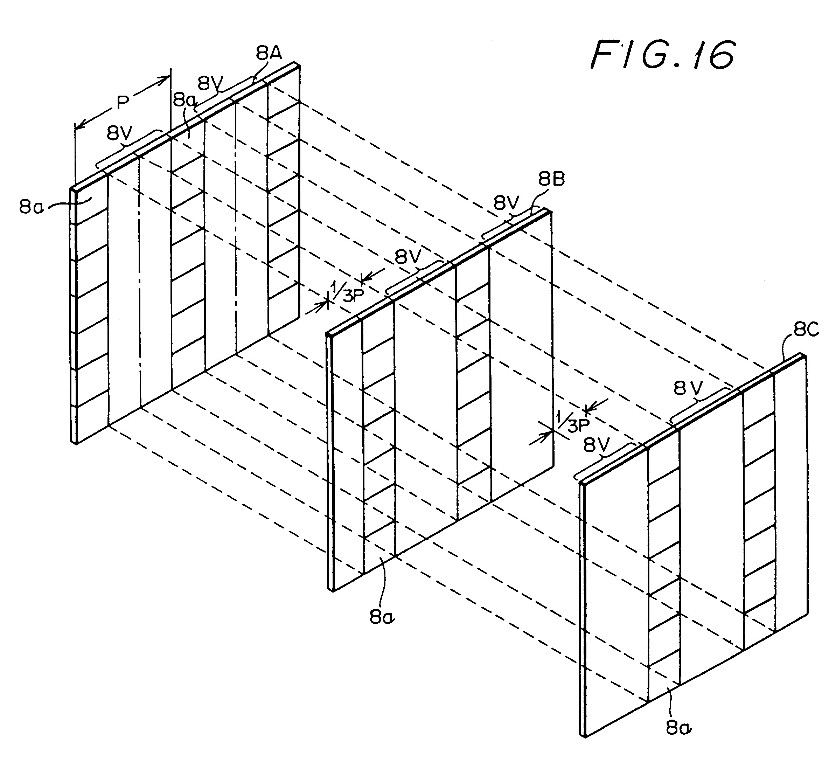

Figure 16 shows schematically an example of how the first to third CCDs 8A, 8B, 8C are bonded to the prisms 51A, 51B, 51C.

As shown in Figure 16, the first to third CCDs 8A, 8B, 8C are bonded to the light emitting faces 52A, 52B, 52C with a displacement of 1/3P between the vertical transfer shift registers 8V (spacing portion) which give a pitch P between the pixels 8a in the horizontal direction.

Referring back to Figure 15, when the high speed moving object 1 is picked up by the above-described image detection device 8, object images incident on pixel groups 8a of the photo-sensitive surfaces of the first to third CCDs 8A, 8B, 8C are converted into a set of three video signals. An output from the CCD 8C is directly supplied to an adder circuit 57, an output from the CCD 8B is delayed by a delay amount of 1/3 pitch by a 1/3 pitch delay circuit 55 and then fed to the adder circuit 57, and an output from the CCD 8A is delayed by a delay amount of 2/3 pitch by a 2/3 pitch delay circuit 56 and then supplied to the adder circuit 57.

The video signals from the first to third CCDs 8A, 8B, 8C are added by the adder circuit 57 and the added video signal is supplied through the video processor circuit 16, the adder circuit 17 and the switch 20, which switches between the standard mode according to the ordinary television system and the slit mode, to the monitor receiver 22, which comprises display apparatus such as a CRT, LCD or the like, and which thus displays an image in a similar manner to Figure 2. This arrangement shows a path by which the video signal is displayed on the monitor receiver 22 by way of the movable contact a and the fixed contact b of the switch 9A as shown in Figure 2.

The video signal output from the adder circuit 17 is supplied through the adder circuit 18 to the video tape recorder 23 and the other recording apparatus 28, such as a disc recorder, data recorder or the like, wherein the signal is recorded.

Operation of the slit mode signal generator circuit 11 and the standard mode signal generator circuit 12 in the arrangement shown in Figure 15 will be described below.

The first to third CCDs 8A, 8B, 8C are arranged such that the respective pixel groups 8a are displaced in the horizontal direction by 1/3 of the pitch P between the pixels of each CCD. Accordingly, considering one line, the output signals which are delayed by pitches of 1/3P and 2/3P by the delay circuits 55 and 56 are supplied to and added by the first adder circuit 57, whereby an image is generated whose brightness is substantially three times that of the single chip CCD. The video signal outputs are also added and supplied to the video signal processor circuit 16.

With regard to the operation of the first to third CCDs 8A, 8B, 8C in the standard mode, the structures of the first to third CCDs 8A, 8B, 8C are the same so that the structure and operation thereof are similar to those described with reference to Figure 3 and Figures 4A to 4D.

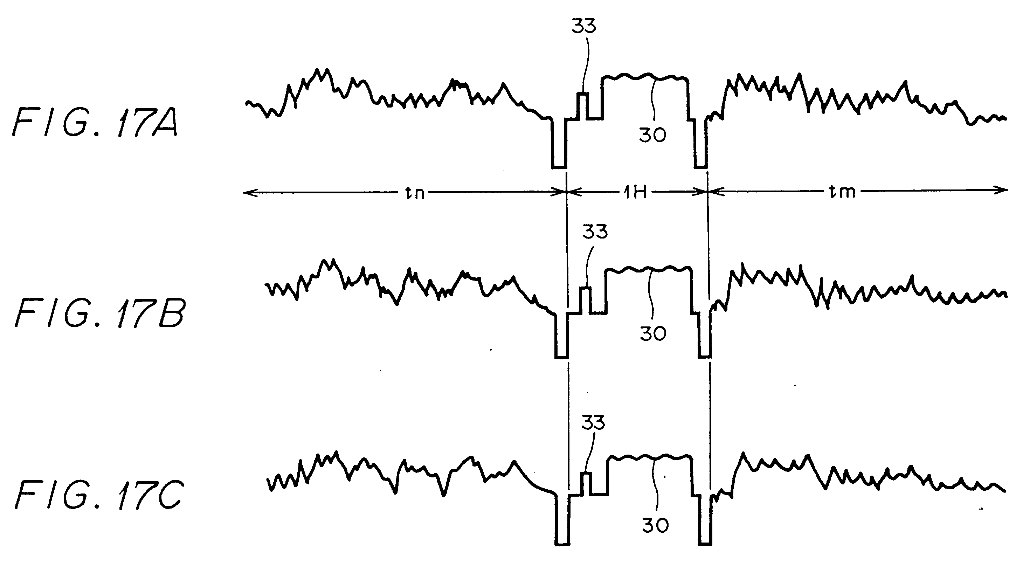

Similarly, the arrangement and operation of the first to third CCDs 8A, 8B, 8C in the slit mode are similar to those described with reference to Figure 5 and Figures 6A to 6D. Accordingly, considering the added voltage in the adder circuit 57, because the first to third CCDs 8A, 8B, 8C are disposed such that the bonded positions of the pixels are sequentially phase-shifted by 1/3 of the pitch P between the pixels in the horizontal direction, the optical image output is phase-shifted by 1/3P of one ordinary line. However, the phases of the image outputs are delayed by the delay circuits 55, 56 and matched and added by the adder circuit 57. Therefore, as shown in Figures 17A to 17C, the video signals 30 of the first to third CCDs 8A, 8B and 8C are added and then a video signal 30 whose resolution is as high as three times the ordinary resolution is supplied to the video signal processor circuit 16. In order words, the CCD surface can be effectively utilised by filling the spaces between the columns of pixels 8a with pixel columns of the other CCDs.

While the three CCDs are disposed with a displacement of 1/3 of the pitch P between the pixels in the above description, if two CCDs are disposed on a light emitting face of a prism which deflects an object image into two directions, a displacement of 1/2 of the pitch P between the pixels may be used to give a video signal having a resolution substantially twice as high as the conventional one. It is clear, therefore, that if n CCDs are utilised, a video signal having a resolution n times as high as the conventional one can be obtained.

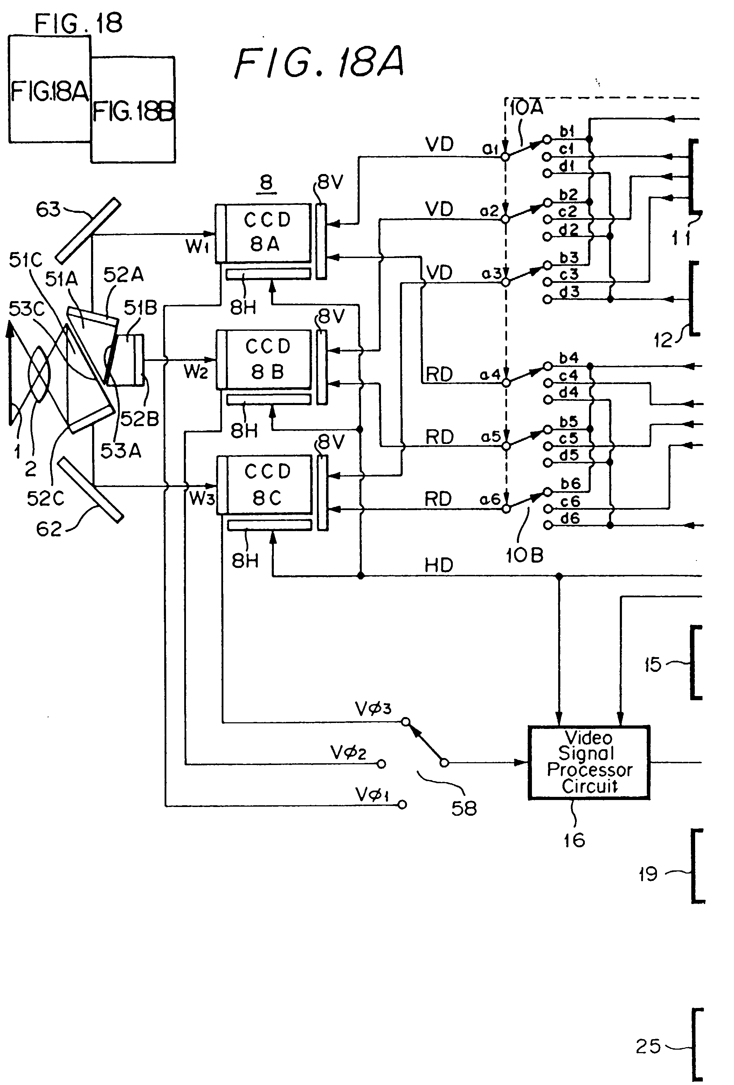

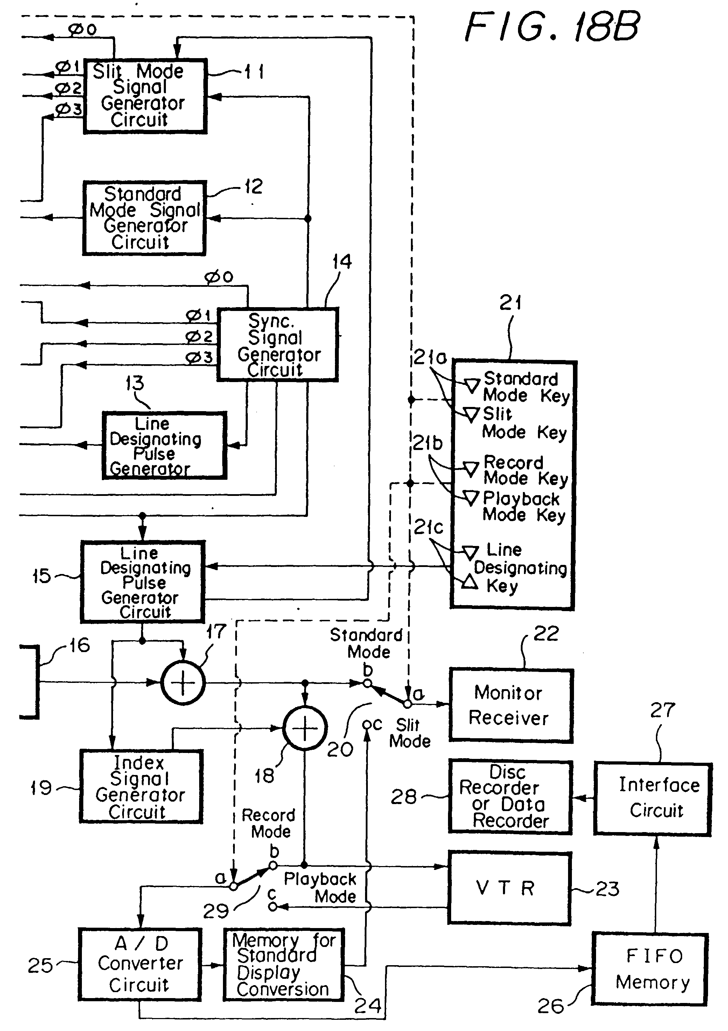

While n CCDs disposed with a displacement of 1/n pitch to derive video signals simultaneously and thereby increase the resolution of the resulting video signal has been described with reference to Figure 15, if a slit camera is constructed as shown in Figure 18, then it is possible to increase resolution in the horizontal direction.

In the arrangement of Figure 18, the optical system can be constructed in exactly the same way as that of Figure 15, and parts corresponding to like parts of Figure 15 are marked with the same reference numerals. Therefore, only the structures in Figure 18 which differ from those of Figure 15 will be described below.

As shown in Figure 18, object images incident on the pixel groups 8a of the first to third CCDs 8A, 8B, 8C are converted into a set of three video signals in a parallel fashion which are fed to switching means 58, from which a line-sequential video signal is supplied to the video processor circuit 16.

The slit mode signal generating circuit 11 derives an output signal 0̸₀ for outputting the drive signal VD which drives the first to third CCDs 8A, 8B, 8C in series, and timing signals 0̸₁, 0̸₂, 0̸₃ for outputting the drive signal VD which drives the first to third CCDs 8A, 8B, 8C at a timing difference of 1/n cycle.

Similarly, the sync signal generator circuit 14 derives an output signal 0̸₀ for outputting the read-out pulse RD which reads out the first to third CCDs 8A, 8B, 8C in series, and timing signals 0̸₁, 0̸₂, 0̸₃ for outputting the read-out pulse RD which reads out the first to third CCDs 8A, 8B, 8C at a timing difference of 1/n cycle. These signals 0̸₀, 0̸₁, 0̸₂, and 0̸₃ are supplied via the switch 10B to the vertical transfer shift registers 8V of the first, second and third CCDs 8A, 8B and 8C. Also, the read-out pulse RD used when the standard mode signal is read out is supplied to the 1/n frequency-dividing circuit 13 and then fed via the switch 10B to the vertical transfer shift registers 8V of the first, second and third CCDs 8A, 8B and 8C.

In more detail, the output signal 0̸₀ from the slit mode signal generator circuit 11 is supplied to fixed contacts b₁, b₂, b₃ of the switch 10A of a three-series three-contact configuration. Similarly, the timing signals 0̸₁, 0̸₂, 0̸₃ from the slit mode signal generator circuit 11 are supplied to fixed contacts c₁, c₂, c₃ respectively of the switch 10A, and the output signal from the standard mode signal generator circuit 12 is supplied to fixed contacts d₁, d₂, d₃ of the switch 10A.

Three movable contacts a₁, a₂, a₃ of the switch 10A are respectively coupled to the vertical transfer shift registers 8V of the first, second and third CCDs 8A, 8B and 8C.

The output signal 0̸₀ from the sync signal generator circuit 14 is supplied to fixed contacts b₄, b₅, b₆ of the switch 10B of a three-series three-contact configuration. Similarly, the timing signals 0̸₁, 0̸₂, 0̸₃ from the sync signal generator circuit 14 are supplied to fixed contacts c₄, c₅, c₆ respectively of the switch 10B. Further, the output signal from the frequency-dividing circuit 13 is supplied to fixed contacts d₄, d₅, d₆ of the switch 10B.

Three movable contacts a₃, a₄, a₅ of the switch 10B are respectively coupled to the vertical transfer shift registers 8V of the first, second and third CCDs 8A, 8B and 8C.

In the arrangement shown in Figure 18, as described with reference to Figure 16, the first, second and third CCDs 8A, 8B, 8C are bonded to the light emitting faces 52A, 52B, 52C of the prisms 51A, 51B, 51C with a displacement of 1/3P, and the timing signals 0̸₀ used simultaneously to drive and read out the drive signal and the read-out pulse are supplied from the slit mode signal generator circuit 11 and the sync signal generator circuit 14 to the vertical transfer shift registers 8V of the first, second and third CCDs 8A, 8B and 8C.

Since the pixels 8a of the first, second and third CCDs 8A, 8B and 8C are displaced in the horizontal direction by 1/3 of the pitch P between the pixels, the video signals V_{0̸1}, V_{0̸2}, V_{0̸3}, each of which is shifted by 1/3P, are input to the switch 58 line by line. In this case, if the output of the switch 58 is supplied to the video processor circuit 16, then the video processor 16 derives video signals 30_{0̸1}, 30_{0̸2}, 30_{0̸3} which are sequentially phase-shifted by 1H each as shown in Figures 19A to 19C.

Further, if the first, second and third CCDs 8A, 8B and 8C are respectively bonded to the light emitting faces 52A, 52B and 52C of the prisms 51A, 51B and 51C without shifting the phase of the pixels 8a, then the switches 10A and 10B are switched in such a fashion that the output signals from the slit mode signal generator circuit 11 and the sync signal generator circuit 14 are driven and read out by the reference timing signals 0̸₁, 0̸₂, 0̸₃ which are phase-shifted by the predetermined phase-shift of 1/n each as shown in Figure 18.

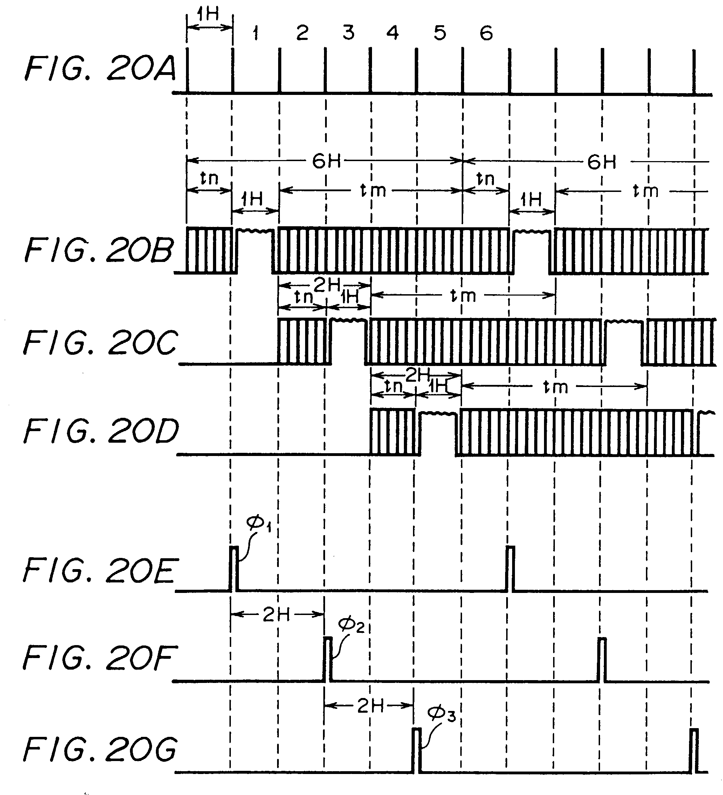

More specifically, the timing signals 0̸₁, 0̸₂, 0̸₃ from the slit mode signal generator circuit 11 and the sync signal generator circuit 14 are output and fed to the fixed contacts c₁, c₂, c₃ and c₄ c₅, c₆ of the switches 10A and 10B and fed through the movable contacts a₁, a₂, a₃ and a₄, a₅, a₆ to the vertical transfer shift registers 8V of the first, second and third CCDs 8A, 8B, 8C as the drive signal VD and the read-out pulse RD respectively. In this case, the switches 10A and 10B are switched to the slit mode by the operation unit 21. For example, the switches 10A and 10B may be switched at the timings shown in Figures 20E, 20F and 20G.

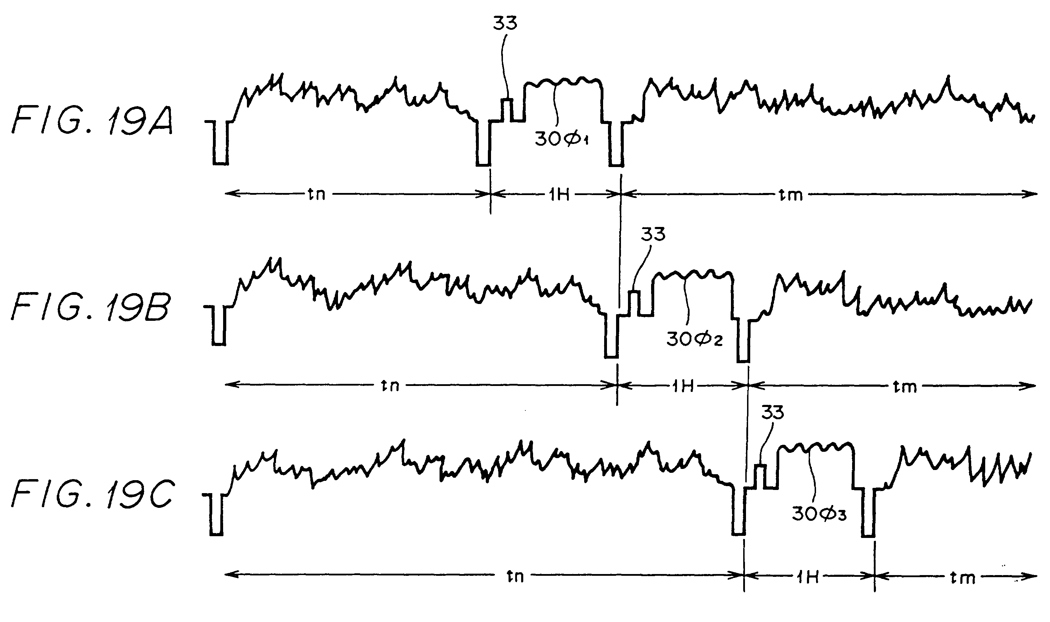

Thus, the video signals V_{0̸1}, V_{0̸2}, V_{0̸3} from the first, second and third CCDs 8A, 8B and 8C sequentially switch the switch 58 at the timings shown in Figures 20E, 20F, 20G thereby to supply outputs, which are shifted by 2H each as shown in Figures 20B, 20C, 20D, to the video processor circuit 16. While the predetermined read-out cycle is selected to be 6H in Figure 20A, and the output is read out every 2H within one cycle, the output may be generated at every 1H pitch as shown in Figure 19. In short, if the outputs from the first, second and third CCDs 8A, 8B, 8C are generated at equal intervals, then the video output in the time axis direction of the object 1, which constantly changes at high speed, can be read out during a short period of time.

Thus, while the image signal in the slit mode is read out every 6H at high speed by a single CCD, referring to Figure 20, according to this embodiment the video signal in the slit mode can be obtained at every 2H at high speed in the time axis direction within 6H. In addition, the video signal in the slit mode can be read out during the mode in which other CCDs are shifted at high speed.

While the imager apparatus 8 is described above as a black and white camera apparatus, the imager apparatus 8 comprises three sets of CCDs of monocolour type (one-chip colour) in which R (red), G (green) and B (blue) filters are disposed on the front surfaces of the CCDs 8A, 8B and 8C respectively, then colour video signals are supplied to the input side of the video processor circuit 16 from the first, second and third one-chip colour CCDs 8A, 8B, 8C. Thus, it is possible to obtain camera apparatus in which the resolution in the time axis direction can be improved during a short period of time in the slit mode in a similar way to the black and white imager apparatus.

While three CCDs are provided in the above embodiment, if two CCDs are provided in the two directions then it is possible to obtain a video signal whose resolution in the time axis direction is substantially twice as high as the conventional one.

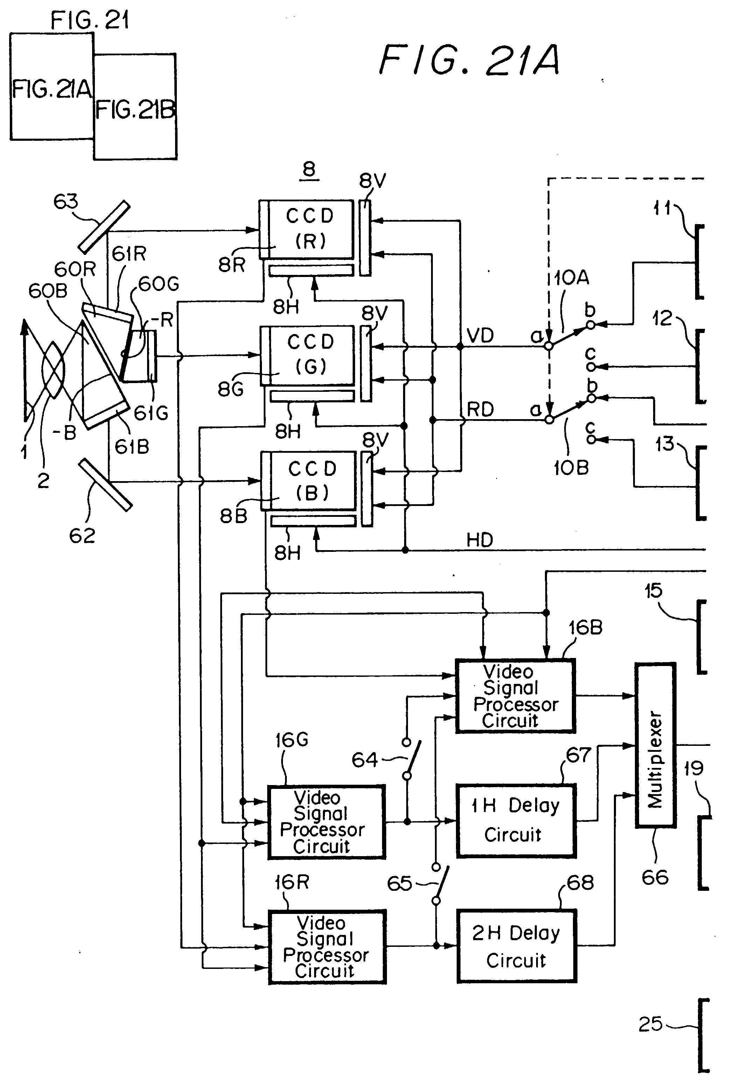

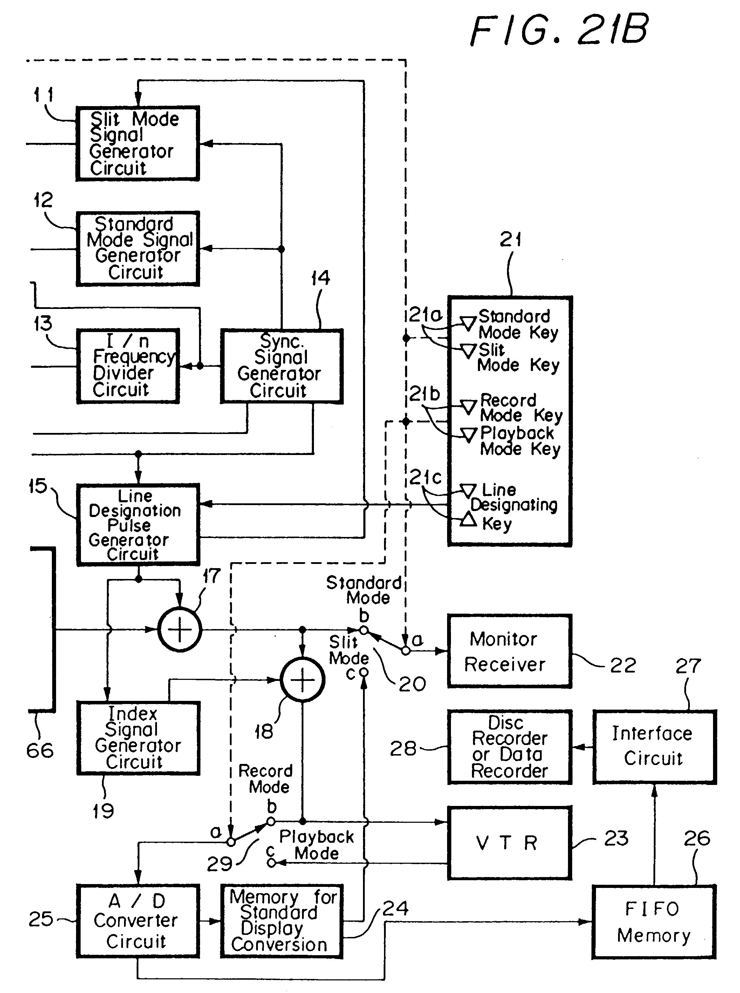

The description of the embodiments thus far has mainly referred to a black and white camera apparatus. Referring to Figures 21 to 24, a camera apparatus in which a three-chip type CCD is used as the image detection device will now be described.

Figure 21 is a block diagram showing the entire arrangement of an embodiment of colour camera apparatus. In Figure 21, parts corresponding to like parts of Figures 15 and 18 are marked with the same reference numerals and therefore need not be described in detail.

In Figure 21, the image pick-up device 8 is formed of a three-chip CCD of the interline type for example. The three-chip CCD 8 includes three CCDs for three primary colour signals R, G, B, and each of the CCDs 8R, 8G, 8B is composed of a pixel group forming a sensor portion, a vertical transfer register 8V and a horizontal transfer shift register 8H.

A synthesised prism composed of three prisms 60B, 60R, 60G and trimming filters 61B, 61R, 61G forming a three-primary colour analysing optical system is disposed in the front stage of these CCDs 8R, 8G and 8B.

Incident light R, G, B from the object 1 is introduced via the relay lens 2 into the prism 60B. Blue light B is reflected on the dichroic surface -B of the prism 60B, and the red and green light R, G travels therethrough. The blue light B is corrected by the blue trimming filter 61B and is then incident on the photo-sensitive surface of the blue CCD 8B via a mirror 62.

The red and green light which has travelled through the dichroic surface -B of the prism 60B, is supplied to the prism 60R in which the red light R is reflected by a dichroic surface -R through which the green light G passes. The red light R reflected by the dichroic surface -R of the prism 60R is corrected by the trimming filter 61R and is then incident on the photo-sensitive surface of the red CCD 8A via a mirror 63.

The green light G which has travelled through the prism 60R is corrected by the green trimming filter 61G and is then incident on the photo-sensitive surface of the green CCD 8G.

When the object 1, moving at high speed, is detected by the camera apparatus 8, object images incident on the photo-sensitive surfaces of the red, green and blue CCDs 8R, 8G, 8B are converted into red, green and blue video signals R, G, B and then fed to video signal processor circuits 16R, 16G and 16B.

Of the video signal processors 16R, 16G and 16B, the video signal processor 16B, for example, includes an NTSC conversion encoder (not shown). When the video signal is output as the NTSC colour video signal, the blue video signal B from the CCD 8B and the red and green video signals R, G from the CCDs 8R, 8G are processed by the video signal processor circuits 16G and 16R and supplied via switches 64, 65 to the video signal processor circuit 16B. These signals are then supplied via a multiplexer circuit 66, which will be described later, the first adder circuit 17 and the switch 20 to the display device, such as a CRT, LCD or the like, within the monitor receiver, so that the imager signal can be monitored.

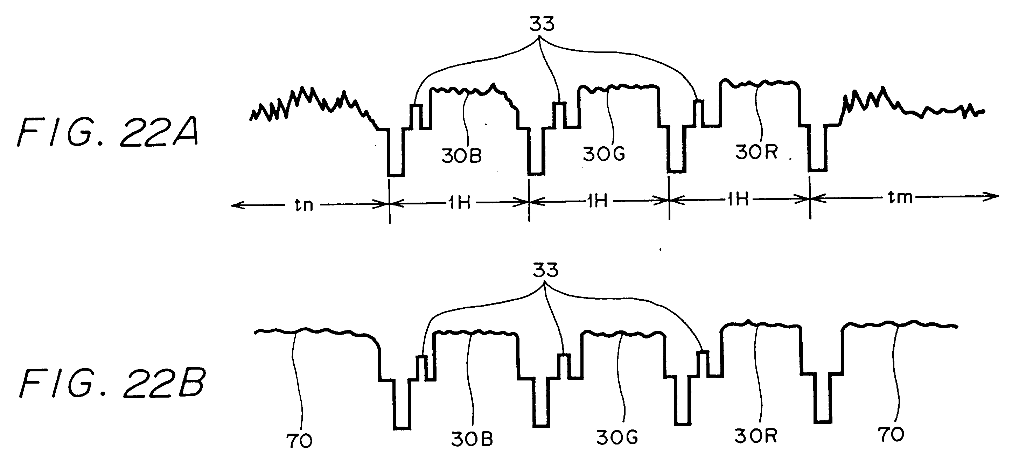

In this embodiment, in the slit mode the red, green and blue video signals R, G and B from the CCDs 8R, 8G, 8B of the three-chip type are respectively supplied to the video signal processor circuits 16R, 16G, 16B. Unnecessary data used in the high speed processing is cancelled and processed by these video signal processor circuits. An output of the video signal processor circuit 16B is directly supplied to the multiplexer circuit 66, and an output of the video signal processor circuit 16G is supplied through a 1H (one horizontal period) delay circuit 67 to the multiplexer circuit 66. Also, an output of the video signal processor circuit 16R is supplied through a 2H delay circuit 68 to the multiplexer circuit 66. Thus, in the multiplexer circuit 66, these output signals are time-division-multiplexed and output as video signals 30R, 30G, 30B in a line-sequential manner as shown in Figure 22A.

An output of the multiplexer circuit 66 is supplied to the adder circuit 17, in which a line designating pulse from the line designating pulse generating circuit 15 is added to the red, green and blue video signals 30R, 30G, 30B thus converted in a line-sequential manner. The line designating pulse is also supplied to the index generating circuit 19.

An output of the adder circuit 17 is supplied through the fixed contact b and the movable contact a of the switch 20, which switches between the standard mode in which a picture is taken according to the ordinary television system and the above-mentioned slit mode, to the monitor receiver 22, whereby an image is displayed.

The output of the adder circuit 17 is also supplied to the second adder circuit 18. The index signal from the index generating circuit 19 is supplied to the second adder circuit 18, in which index signals 33 shown in Figures 22A and 22B are added to the red, green and blue video signals 30R, 30G and 30B, whereby the index signals are supplied to the video tape recorder 23 and other recording apparatus 28, such as a disc recorder, data recorder or the like, wherein the red, green and blue video signals thus converted in a line-sequential fashion are recorded.

The drive signal HD and the like are supplied to the horizontal transfer shift registers 8H of the CCDs 8R, 8G, 8B and the video signal processor circuits 16B, 16G, 16R from the sync signal generator circuit 14.

The operation unit 21 includes control means such as a computer or the like (not shown). On the basis of the instruction signal from the operation unit 21, the slit mode and the standard mode key is set to allow the drive signal VD and the read-out pulse RD to be supplied via the switches 10A, 10B to the vertical transfer shift registers 8V, of the CCDs 8R, 8G, 8B, respectively.

More specifically, various vertical reference signals from the sync signal generator circuit 14 are respectively supplied to the standard mode signal generator circuit 12, the slit mode signal generator circuit 11, the video signal processor circuits 16B, 16G and 16R, the fixed contact b of the switch 10B, the 1/n frequency-dividing circuit 13 and the line designating pulse forming circuit 15.

The line-designating pulse signal from the line designating pulse generator circuit 15 is supplied to the slit mode signal generating circuit 11, and also to the adder circuit 17 and the index generator circuit 19 as described above.

The outputs of the slit mode signal generator circuit 11 and the standard mode signal generator circuit 12 are coupled to the fixed contacts b and c of the switch 10A, and the movable contact a of the switch 10A is coupled to the respective vertical transfer shift registers 8V of the CCDs 8R, 8G, 8B, thereby to supply the drive signal VD to the vertical transfer shift registers 8V. Further, the output of the 1/n frequency-dividing circuit 13 is coupled to the fixed contact c of the switch 10B, and the fixed contacts c, b of the switch 10B are coupled to the movable contact a thereby to supply the drive signal to the vertical transfer shift register 8V.

The operation unit 21 includes the operation key 21a for switching the CCDs 8R, 8G, 8B to the standard mode and the slit mode, the record and/or playback key 21b for enabling the signals of the respective modes to be recorded and/or reproduced by the video tape recorder 23 or other recording apparatus 28, and the line designating key 21c for designating the line position of the slit mode and the number of lines. Operation of these keys 21a, 21b and 21c controls the slit mode and standard mode change-over switches 10A, 10B, the switch 20 for switching between monitoring of the slit mode and the standard mode, and the switch 29 for switching between the recording and reproducing states of the video tape recorder 23 as shown by dashed lines in Figure 21. Also, the line designating pulse generator circuit 15 is driven by operating the line designating key 21c.

In the second adder circuit 18, the index signal from the index generator circuit 19 is added at the predetermined position of the line designated. Then, the added signal from the second adder circuit 18 is supplied through the video tape recorder 23 and the fixed contact b and the movable contact a of the recording and/or reproducing change-over switch 29 to the A/D converter circuit 25, in which the signal is converted into a digital signal. The digital signal is supplied to the standard display conversion memory 24 and the FIFO memory 26, and an output of the FIFO memory 26 is supplied through the interface circuit 27 and recorded by the recording apparatus 28.

The video signal in the slit mode stored in the standard display conversion memory 24 is read out therefrom as the standard mode video signal and fed through the fixed contact c of the switch 20 to the monitor receiver 22 whereby it is displayed on the display means.

Since the CCDs 8R, 8G and 8B are the same in structure, only the CCD 8R of the interline type need be considered. In this case, operation of the slit mode signal generator circuit 11 and the standard mode signal generator circuit 12 are exactly the same as the standard mode operation described earlier with reference to Figure 3 and Figures 4A to 4D and the slit mode operation described earlier with reference to Figure 5 and Figures 6A to 6D. Further, in Figures 21, parts corresponding with like parts of Figures 2, 15 and 18 are marked with the same reference numerals and therefore need not be described in detail. According to this embodiment, a line-sequential colour video signal can be obtained with ease.

The line-designating pulse supplied to the first adder circuit 17 from the line designating pulse generator circuit 15 is superimposed upon the red, green and blue video signals 30B, 30G and 30B from the CCDs 8R, 8G and 8B. At that time, since the switch 20 set in the standard mode connects the movable contact a to the fixed contact b, the colour line marker 32 shown in Figure 7 is superimposed upon the display of the monitor receiver 22 so that the position of the slit line can be designated with ease.

Further, the line-designating pulse from the line designating pulse generating circuit 15 is supplied to the index generator circuit 19. The index generator circuit 19 may be formed of a write buffer memory, a frame memory or the like. The index signal 33 supplied to the second adder circuit 18 is superimposed upon the red, green and blue video signals 30R, 30G and 30B as shown in Figures 22A and 22B.

Since the index signal is superimposed upon the line-sequential red, green and blue video signals 30R, 30G and 30B as shown in Figure 22A, a starting portion of the video signal in the slit mode recorded on the video tape recorder 23 can be detected with ease when the video signal is reproduced.

Further, as shown in Figure 22B, the video signal portion which is shifted at high speed may be removed at every 1H and replaced with another predetermined signal such as a time signal 70 or the like.

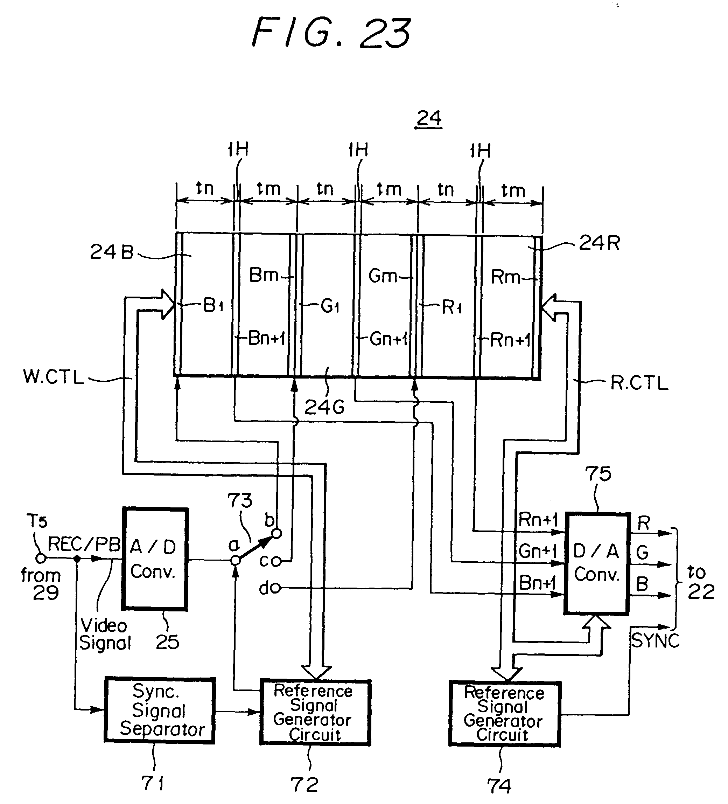

An arrangement in which the video signal in the slit mode of the line sequential red, green and blue colour video signals recorded on the video tape recorder 23 or other recording apparatus 28 as shown in Figure 21 is monitored with high resolution will now be described with reference to Figure 23.

Figure 23 shows a schematic diagram used to explain the structure of the standard display conversion memory 24. The signal recorded on, or reproduced from, the video tape recorder 21 shown in Figure 21 is supplied from the switch 29 to an input terminal T₅. This signal is supplied to the A/D converter circuit 25, in which the analogue signal is converted into digital signal, and also to a sync separator circuit 71 in which a sync signal is separated from the video signal.

On the basis of the sync signal from the sync signal separator circuit 71, a reference signal generator circuit 72 forms a predetermined timing signal and supplies a write clock signal, an address pulse or the like to the memory 24. Also, a switch 73 is controlled by the reference signal generator circuit 72. The memory 24 includes storage areas 24B, 24G, 24R corresponding to the CCDs 8R, 8G and 8B.

The movable contact a of the switch 73 is controlled by a control signal from the reference signal generator circuit 72, and the fixed contacts b, c and d thereof are respectively connected in such a fashion that the writing of the line-sequential video signal is started from the first address of each of the memory areas 24B, 24G and 24R.

A reference signal generator circuit 74 for reading out the memory operates to supply a read-out clock to a digital-to-analogue (D/A) converter circuit 75 and the memory 24 to control the memory 24 so that memory data in the memory areas 24B, 24G, 24R is read out simultaneously. Read-out R, G, B video data in the slit mode (for example, data Bₙ₊₁, Gₙ₊₁, Rₙ₊₁ which is provided when signal charges are shifted at high speed during the tn and tm periods and shifted at low speed during the 1H period) is converted into analogue data by the D/A converter circuit 75 as an NTSC television signal, for example, for display in colour on the display means of the monitor receiver 22.

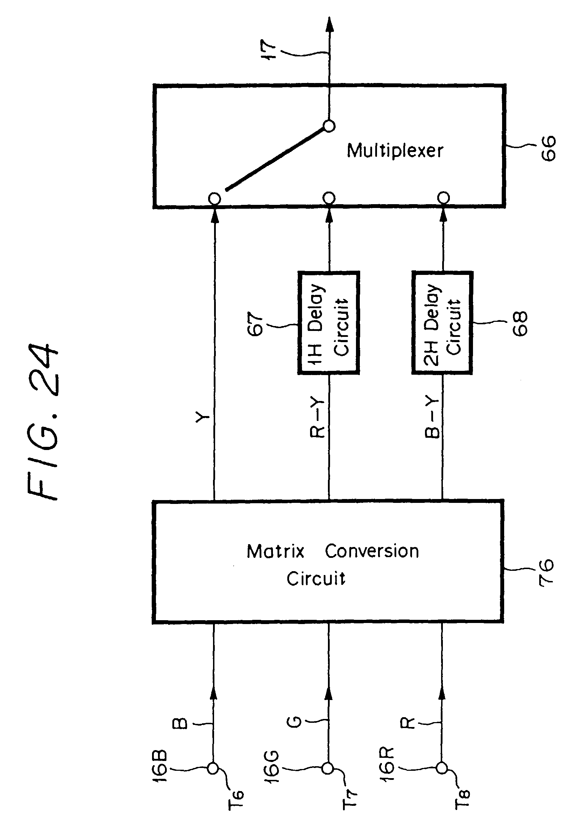

While the three primary colour video signals R, G and B are described above as being recorded on the video tape recorder 23, the following variant shown in Figure 24 also is possible. In Figure 24, video signal outputs B, G, R from the video processor circuits 16B, 16G and 16R are supplied to input terminals T₆, T₇ and T₈. These video signals are supplied to a matrix conversion circuit 76, in which they are converted into a luminance signal Y, and red and blue colour difference signals R-Y and B-Y. These colour difference signals R-Y and B-Y are then supplied through 1H and 2H delay circuits 67 and 68 to a multiplexer 66, in which they are converted into a line-sequential video signal and then recorded on the video tape recorder 23.

In the colour camera apparatus of this embodiment, since signal charges are shifted at low speed during 1H to several Hs of the area sensor, such as the three chip colour CCDs or the like, and shifted at high speed during other lines, and then recorded on the video tape recorder in a line sequential fashion, a slit camera which is compatible with a standard camera is obtained by only electrical modification of the area sensor. Also, a colour slit camera having a high resolution can be obtained.

Thus, embodiments of the invention provide:
1. A camera apparatus which can serve as a slit camera by modification only of the electrical system of a standard CCD camera. Also, the slit camera can be constructed without a mechanical slit plate and a polygonal mirror.
2. Slit camera apparatus in which the slit position can be displayed on a picture screen of the display means and the slit position can be designated with ease.
3. Slit camera apparatus in which, in the playback mode, a starting portion of the effective slit line can be detected with ease by means of an index signal.
4. A slit camera in which resolution can be improved by disposing a line adder circuit in the video signal system.
5. A slit camera compatible with an ordinary camera which can be driven according to the standard television system.
6. A slit camera wherein a plurality of CCDs are disposed with a displacement of 1/n of the pitch between the pixels to obtain a black and white camera apparatus which can pick up an image with high resolution.
7. A slit camera wherein a plurality of CCDs are employed so that it is possible to obtain a colour camera apparatus which can serve both as a slit camera and an ordinary colour camera.
8. A slit camera wherein a plurality of CCDs are disposed with a displacement of 1/n of the pitch between the pixels, or the video signals from the CCDs are read out at timings shifted by 1/n cycle, so that resolution in the time axis direction can be improved.

## Claims

1. Camera apparatus comprising:
a two-dimensional array of image elements (8a) arranged in lines and columns for producing image charge signals;
a plurality of column shift registers (8V) associated with respective columns of the image elements (8a) for receiving the image charge signals therefrom and shifting the image charge signals line by line in the column direction;
a line shift register (8H) for receiving successive lines of image charge signals from the column shift registers (8V) and shifting the image charge signals of each line to an output terminal (T); and
drive means (11) for driving the column shift registers (8V) to shift the image charge signals towards the line shift register (8H);
characterised in that the apparatus includes line designation means (21, 15) for selecting at least one line of the image charge signals produced by the array of image elements (8a); and in that the drive means (11) is arranged to drive the column shift registers (8V) to shift the lines of image charge signals at a low rate when said at least one line of image charge signals is being shifted into the line shift register (8H) and to shift the lines of image charge signals at a high rate when the other lines of image charge signals are being shifted into the line shift register (8H), whereby the camera apparatus is operable for detecting an object (1) moving at high speed.

2. Apparatus as claimed in claim 1, including:
switching means (21) for selectively switching the operational mode of the apparatus between a slit mode, in which the drive means (11) drives the column shift registers (8V) to shift the image charge signals at said low and high rates, and a standard mode, in which the drive means (11) drives the column shift registers (8V) in accordance with a standard television system; and
display means (22) for displaying an image acquired by the apparatus in said standard mode with a line marker (32) superimposed thereon, the line marker (32) corresponding to said at least one line selected by the line designation means (21, 15).

3. Apparatus as claimed in claim 2, wherein the said low rate is the same as the rate at which the column shift registers (8V) shift the lines of image charge signals in the standard mode.

4. Apparatus as claimed in any preceding claim including:
index generating means (19) for generating an index signal (33) indicative of the position of said at least one line of image charge signals in the output signal from said output terminal (T);
superimposing means for superimposing said index signal (33) upon said output signal; and
recording means (23) for recording the said output signal with said index signal (33) superimposed thereon, said recording means (23) being arranged to detect said index signal (33) upon reproduction of the recorded signal.

5. Apparatus as claimed in any preceding claim, wherein said at least one line of image charge signals comprises a plurality of lines of image charge signals, the apparatus including adding means (35A, 35B) for adding said plurality of lines of image charge signals output from said output terminal (T).

6. Apparatus as claimed in any preceding claim, wherein the lines of image charge signals produced by the array of image charge elements (8a) are read out from said output terminal (T) during a period that is substantially equal to K standard line scan periods, where K is a product of two irreducible factors of the number of scanning lines making up a frame of a standard television signal.

7. Apparatus as claimed in claim 6, wherein said standard television signal includes a vertical blanking period including a vertical synchronising pulse and equalising pulses, and said vertical synchronising pulse and equalising pulses take up a number of scanning lines that is less than K.

8. Apparatus as claimed in claim 6 or claim 7, wherein K is the minimum value of said product of irreducible factors.

9. Apparatus as claimed in claim 8, wherein the number of scanning lines in a frame of said standard television signal is 525 and wherein K is 15.

10. Apparatus as claimed in claim 1, including a plurality n of said two dimensional arrays of image elements (8a), each array having an associated plurality of said column shift registers (8V) and a said line shift register (8H) for shifting image charge signals to an output terminal (T), corresponding image elements (8A) of successive said arrays being displaced by 1/n of the image element pitch in the horizontal or vertical direction relative to an acquired image of said object, wherein said line designation means (21, 15) is operable for selecting at least one line of the image charge signals produced by each array, and wherein the drive means (11) is arranged to drive the column shift registers (8V) of each array to shift the lines of image charge signals at a low rate when said at least one line of image charge signals is being shifted into the line shift register (8H) and to shift the lines of image charge signals at a high rate when the other lines of image charge signals are being shifted into the line shift register (8H).

## Patentansprüche

1. Kameravorrichtung aufweisend:
eine zweidimensionale Anordnung von Bildelementen (8a), die in Zeilen und Spalten zur Erzeugung von Bildladungssignalen angeordnet sind;
mehrere Spalten-Schieberegister (8V), die jeweils Spalten der Bildelemente (8a) zugeordnet sind, um die Bildladungssignale von diesen zu erhalten und die Bildladungssignale zeilenweise in der Spaltenrichtung zu verschieben;
ein Zeilen-Schieberegister (8H) zum Erhalten der aufeinanderfolgenden Zeilen der Bildladungssignale von den Spalten-Schieberegistern (8V) und zum Schieben der Bildladungssignale von jeder Zeile zu einem Ausgangsanschluß (T); und
eine Ansteuereinrichtung (11) zum Ansteuern der Spalten-Schieberegister (8V), um die Bildladungssignale in Richtung des Zeilen-Schieberegisters (8H) zu verschieben;
**dadurch gekennzeichnet**, daß die Vorrichtung eine Zeilenzuweisungseinrichtung (21, 15) zur Auswahl wenigstens einer Zeile der Bildladungssignale aufweist, die durch die Anordnung der Bildelemente (8a) erzeugt wurden, und dadurch, daß die Ansteuereinrichtung (11) die Spalten-Schieberegister (8V) ansteuert, um die Zeilen der Bildladungssignale mit einer niedrigen Rate zu verschieben, wenn die wenigstens eine Zeile der Bildladungssignale in das Zeilen-Schieberegister (8H) verschoben wird und um die Zeilen der Bildladungssignale mit einer hohen Rate zu verschieben, wenn die übrigen Zeilen der Bildladungssignale in das Zeilen-Schieberegister (8H) geschoben werden, wodurch die Kameravorrichtung zur Erfassung eines Objektes (1) betreibbar ist, daß sich mit hoher Geschwindigkeit bewegt.

2. Vorrichtung nach Anspruch 1, aufweisend:
eine Schalteinrichtung (21) zum selektiven Umschalten des Betriebsmodus der Vorrichtung zwischen einem Schlitzmodus, in dem die Ansteuereinrichtung (11) die Spalten-Schieberegister (8V) zur Verschiebung der Bildladungssignale mit der hohen und der niedrigen Rate ansteuert, und einem Standardmodus, in dem die Ansteuereinrichtung (11) die Spalten-Schieberegister (8V) gemäß einem Standard-Fernsehsystem ansteuert; und
eine Anzeigeeinrichtung (22) zur Anzeige eines Bildes, das durch die Vorrichtung in dem Standardmodus aufgenommen ist und dem eine Zeilenmarkierung (32) überlagert ist, wobei die Zeilenmarkierung (32) der wenigstens einen Zeile entspricht, die durch die Zeilenzuweisungseinrichtung (21, 15) ausgewählt ist.

3. Vorrichtung nach Anspruch 2,
bei der die niedrige Rate die gleiche Rate ist, mit der die Spalten-Schieberegister (8V) die Zeilen der Bildladungssignale in dem Standardmodus verschieben.

4. Vorrichtung nach einem der vorhergehenden Ansprüche, aufweisend:
eine Index-Erzeugungseinrichtung (9) zur Erzeugung eines Indexsignales (33), das die Position der wenigstens einen Zeile der Bildladungssignale in dem Ausgangssignal von dem Ausgangsanschluß (T) anzeigt;
eine Überlagerungseinrichtung zur Überlagerung des Indexsignales (33) auf das Ausgangssignal; und
eine Aufzeichnungseinrichtung (23) zur Aufzeichnung des Ausgangssignales mit dem ihm überlagerten Indexsignal (32), wobei die Aufzeichnungseinrichtung (23) das Indexsignal (33) bei einer Wiedergabe des aufgezeichneten Signales erfaßt.

5. Vorrichtung nach einem der vorhergehenden Ansprüche,
bei der die wenigstens eine Zeile der Bildladungssignale mehrere Zeilen an Bildladungssignalen umfaßt, wobei die Vorrichtung eine Addiereinrichtung (35A, 35B) zur Addition der mehreren Zeilen der Bildladungssignale aufweist, die an dem Ausgangsanschluß (T) ausgegeben werden.

6. Vorrichtung nach einem der vorhergehenden Ansprüche,
wobei die Zeilen der Bildladungssignale, die durch die Anordnung der Bildladungselemente (8a) erzeugt werden, von dem Ausgangsanschluß (T) während einer Periode ausgelesen werden, die im wesentlichen gleich K Standardzeilen-Abtastperioden entspricht, wobei K ein Produkt von zwei Primär-Faktoren der Zahl der Abtastzeilen ist, die ein Vollbild eines Standard-Fernsehsignales bilden.

7. Vorrichtung nach Anspruch 6,
bei der das Standard-Fernsehsignal eine vertikale Austastperiode aufweist, die einen vertikalen Synchronisierungs-Impuls und einen Ausgleichs-Impuls aufweist, und der vertikale Synchronisierungs-Impuls und Ausgleichs-Impuls eine Anzahl an Abtastzeilen von weniger als K einnehmen.

8. Vorrichtung nach Anspruch 6 oder 7,
wobei K der minimale Wert des Produktes der Primär-Faktoren ist.

9. Vorrichtung nach Anspruch 8,
bei der die Zahl der Abtastzeilen in einem Vollbild des Standard-Fernsehsignales 525 ist und K gleich 15 ist.

10. Vorrichtung nach Anspruch 1,
aufweisend mehrere n der zweidimensionalen Anordnungen an Bildelementen (8a), wobei jede Anordnung eine zugeordnete Anzahl der Spalten-Schieberegister (8V) und ein Zeilen-Schieberegister (8H) zum Verschieben der Bildladungssignale zu einem Ausgang (T) aufweist, wobei entsprechende Bildelemente (8a) von aufeinanderfolgenden Anordnungen um 1/n des Bildelementabstandes in der horizontalen oder vertikalen Richtung bezüglich eines aufgenommenen Bildes des Objekts verschoben sind, wobei die Zeilenzuweisungseinrichtung (21, 15) wenigstens eine Zeile der Bildladungssignale auswählt, die durch jede Anordnung erzeugt werden, und wobei die Ansteuereinrichtung (11) die Spalten-Schieberegister (8V) von jeder Anordnung zur Verschiebung der Zeilen der Bildladungssignale mit einer niedrigen Rate ansteuert, wenn die wenigstens eine Zeile der Bildladungssignale in das Zeilen-Schieberegister (8H) verschoben wird, und um die Zeilen der Bildladungssignale mit einer hohen Rate zu verschieben, wenn die übrigen Zeilen der Bildladungssignale in das Zeilen-Schieberegister (8H) verschoben werden.

## Revendications

1. Caméra comprenant :
un réseau bidimensionnel d'éléments d'image (8a) disposé en lignes et en colonnes pour produire des signaux de charges d'image ;
une pluralité de registres à décalage (8V) associés à des colonnes respectives des éléments d'image (8a) pour recevoir les signaux de charges d'image de ceux-ci et pour décaler les signaux de charges d'image ligne par ligne dans la direction de colonne ;
un registre à décalage de ligne (8H) pour recevoir des lignes successives des signaux de charges d'image des registres à décalage de colonne (8V) et pour décaler les signaux de charges d'image de chaque ligne vers une borne de sortie (T) ; et
un moyen de commande (11) pour commander les registres à décalage de colonne (8V) pour décaler les signaux de charges d'image en direction du registre à décalage de ligne (8H) ;
caractérisé en ce que l'appareil comprend un moyen de désignation de ligne (21, 15) pour sélectionner au moins une ligne des signaux de charges d'image produite par le réseau d'éléments d'image (8a) ; et en ce que le moyen de commande (11) est disposé pour commander les registres à décalage de colonne (8V) pour décaler les lignes des signaux de charges d'image à une fréquence basse lorsque au moins une dite ligne des signaux de charges d'image est décalée dans le registre à décalage de ligne (8H) et pour décaler les lignes des signaux de charges d'image à une fréquence élevée lorsque les autres lignes des signaux de charges d'image sont décalées dans le registre à décalage de ligne (8H), afin que la caméra soit utilisable pour détecter un objet (1) se déplaçant à vitesse rapide.

2. Appareil selon la revendication 1, comprenant :
un moyen de commutation (21) pour commuter sélectivement le mode opérationnel de l'appareil entre un mode à fente, dans lequel le moyen de commande (11) commande les registres à décalage de colonne (8V) pour décaler les signaux de charges d'image auxdits débits faibles et élevés, et un mode standard, dans lequel le moyen de commande (11) commande le registre à décalage de colonne (8V) selon un système de télévision standard ; et
un moyen d'affichage (22) pour afficher une image acquise par l'appareil dans ledit mode standard avec un marqueur de ligne (32) superposé à celle-ci, le marqueur de ligne (32) correspondant à au moins une dite ligne sélectionnée par le moyen de désignation de ligne (21, 15).

3. Appareil selon la revendication 2, dans lequel ledit fréquence basse est le même débit que le débit auquel les registres à décalage de colonne (8V) décalent les lignes des signaux de charges d'image dans le mode standard.

4. Appareil selon l'une quelconque des revendications précédentes comprenant ;
un moyen de génération d'index (19) pour générer un signal d'index (33) indicateur de la position d'au moins une dite ligne des signaux de charges d'image dans le signal de sortie de ladite borne de sortie (T) ;
un moyen de superposition pour superposer ledit signal d'index (33) audit signal de sortie ; et
un moyen d'enregistrement (23) pour enregistrer ledit signal de sortie avec ledit signal d'index (33) superposé à celui-ci, ledit moyen d'enregistrement (23) étant disposé pour détecter ledit signal d'index (33) lors de la reproduction du signal enregistré.

5. Appareil selon l'une quelconque des revendications précédentes, dans lequel au moins une dite ligne des signaux de charges d'image comprend une pluralité de lignes de signaux de charges d'image, l'appareil comprenant un moyen d'addition (35A, 35B) pour additionner ladite pluralité de lignes de signaux de charges d'image fournie par ladite borne de sortie (T).

6. Appareil selon l'une quelconque des revendications précédentes, dans lequel les lignes des signaux de charges d'image produites par le réseau d'éléments de charges d'image (8a) sont extraites de ladite borne de sortie (T) pendant une période qui est substantiellement égale aux périodes de balayage de ligne standard K, où K est un produit de deux facteurs irréductibles du nombre de lignes de balayage composant une trame d'un signal de télévision standard.

7. Appareil selon la revendication 6, dans lequel ledit signal de télévision standard comprend une période de suppression verticale comprenant une impulsion de synchronisation verticale et des impulsions d'égalisation, et ladite impulsion de synchronisation verticale et des impulsions d'égalisation comprennent un nombre de lignes de balayage qui est inférieur à K.

8. Appareil selon la revendication 6 ou 7, dans lequel K est la valeur minimum dudit produit de facteurs irréductibles.

9. Appareil selon la revendication 8, dans lequel le nombre de lignes de balayage d'une trame dudit signal de télévision standard est 525 et dans lequel K vaut 15.

10. Appareil selon la revendication 1, comprenant une pluralité n desdits réseaux bidimensionnels d'éléments d'image (8a), chaque réseau ayant une pluralité associée dedits registres à décalage de colonne (8V) et ledit registre à décalage de ligne (8H) pour décaler des signaux de charges d'image à une borne de sortie (T), des éléments d'image correspondant (8A) desdits réseaux successifs étant déplacés de 1/n de pas d'élément d'image dans la direction horizontale et verticale par rapport à une image acquise dudit objet, dans lequel ledit moyen de désignation de ligne (21, 15) est utilisable pour sélectionner au moins une ligne des signaux de charges d'image produite par chaque réseau, et dans lequel le moyen de commande (11) est disposé pour commander les registres à décalage de colonne (8V) de chaque réseau pour décaler les lignes des signaux de charges d'image à une fréquence basse lorsque ladite au moins une ligne des signaux de charges d'image est décalée dans le registre à décalage de ligne (8H) et pour décaler les lignes des signaux de charges d'image à une fréquence élevée lorsque les autres lignes des signaux de charges d'image sont décalées dans le registre à décalage de ligne (8H).
